(19) Europäisches Patentamt
European Patent Office
Office européen des brevets

(11) EP 4 424 743 A1

(12) EUROPEAN PATENT APPLICATION
published in accordance with Art. 153(4) EPC

(43) Date of publication:
**04.09.2024 Bulletin 2024/36**

(21) Application number: **22887497.0**

(22) Date of filing: **21.10.2022**

(51) International Patent Classification (IPC):
***C08G 63/16*** *(2006.01)* ***C08G 63/181*** *(2006.01)*
***C08L 67/02*** *(2006.01)* ***C08L 23/00*** *(2006.01)*
***C08L 1/02*** *(2006.01)* ***C08J 5/18*** *(2006.01)*

(52) Cooperative Patent Classification (CPC):
**C08G 63/16; C08G 63/181; C08J 5/18; C08L 1/02; C08L 23/00; C08L 67/02;** Y02W 90/10

(86) International application number:
**PCT/KR2022/016115**

(87) International publication number:
**WO 2023/075301 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2021 KR 20210143108**

(71) Applicant: **SK leaveo Co., Ltd.**
**Gyeonggi-do 16338 (KR)**

(72) Inventors:
- **KIM, Kyung Youn**
  **Suwon-si, Gyeonggi-do 16338 (KR)**
- **KIM, Hyung Mo**
  **Suwon-si, Gyeonggi-do 16338 (KR)**
- **KIM, Seong Dong**
  **Suwon-si, Gyeonggi-do 16338 (KR)**
- **KIM, Hoon**
  **Suwon-si, Gyeonggi-do 16338 (KR)**

(74) Representative: **Dehns**
**St. Bride's House**
**10 Salisbury Square**
**London EC4Y 8JD (GB)**

# (54) BIODEGRADABLE POLYESTER RESIN, PREPARATION METHOD THEREFOR, AND BIODEGRADABLE POLYESTER FILM COMPRISING SAME

(57) An embodiment relates to a biodegradable polyester resin, a preparation method therefor, and a biodegradable polyester film comprising same, the resin comprising a bio-derived softener, a first repeating unit, which comprises a first diol moiety and an aromatic dicarboxylic acid moiety, and a second repeating unit, which comprises a second diol moiety and an aliphatic dicarboxylic acid moiety. The biodegradable polyester resin comprises the bio-derived softener so as to have excellent environmental friendliness, can have maximized flexibility while maintaining a suitable tensile strength, and can have both excellent heat resistance and formability, and thus can be used in more diverse fields such as those of: packaging materials, garbage bags, mulching film and disposable products; wrap film, industrial stretch film, and formation film, which require high flexibility; building interior material lamination; and uses requiring three-dimensional formation such as 3D molding

[Fig. 1]

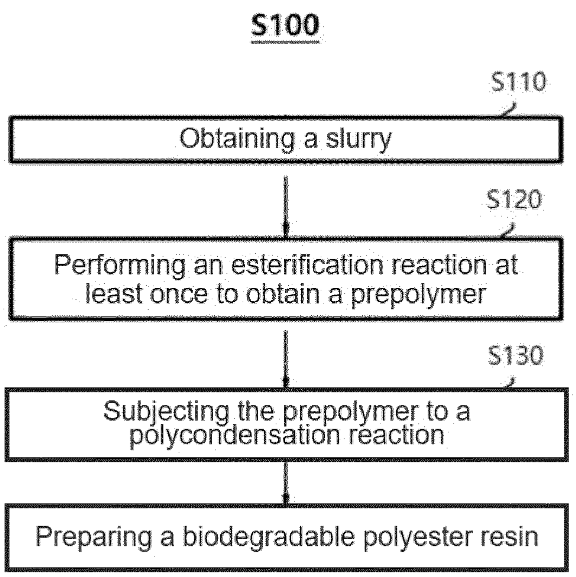


EP 4 424 743 A1

## Description

### Technical Field

The present invention relates to a biodegradable polyester resin, to a process for preparing the same, and to a biodegradable polyester film comprising the same.

### Background Art

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.

In order to solve these problems, studies on biodegradable polymers are being actively conducted.

Used as the biodegradable resin are polybutylene adipate terephthalate (PBAT), polylactic acid (PLA), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and polybutylene succinate (PBS). In particular, they are used for various purposes such as disposable packaging materials, envelopes, mulching films, straws, and trays.

However, since these biodegradable polymers have limitations in flexibility, their use in wrap films, industrial stretch films, or molding films that still require high flexibility is limited.

Specifically, the biodegradable polymers are used to make biodegradable films or molded articles by mixing them at a certain ratio to enhance flexibility suitable for the application. However, it is difficult to be used in the fields where high flexibility is required, since the modulus is too high. There are problems with poor formability and thermal resistance, resulting in a thin forming depth and appearance defects.

[Prior Art Document]

[Patent Document]

(Patent Document 1) Korean Laid-open Patent Publication No. 2014-0106882

### Detailed Description of the Invention

### Technical Problem

An object of the present invention is to provide a polyester resin that has excellent mechanical properties as well as high flexibility and is capable of enhancing formability, processability, and productivity at the same time, and a process for preparing the same.

Another object of the present invention is to provide a biodegradable polyester film and an environmentally friendly molded article, which is excellent in biodegradability while achieving excellent physical properties as described above using the polyester resin.

### Solution to the Problem

The present invention provides a biodegradable polyester resin that comprises a first repeat unit comprising a first diol residue and an aromatic dicarboxylic acid residue and a second repeat unit comprising a second diol residue and an aliphatic dicarboxylic acid residue; and a bio-derived softener.

In addition, the present invention provides a process for preparing a biodegradable polyester resin that comprises a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, and a bio-derived softener is added during the esterification reaction, during the polycondensation reaction, or both.

In addition, the present invention provides a biodegradable polyester film that comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue; and a bio-derived softener.

## Advantageous Effects of the Invention

As the biodegradable polyester resin of the present invention comprises a first repeat unit comprising a first diol residue and an aromatic dicarboxylic acid residue and a second repeat unit comprising a second diol residue and an aliphatic dicarboxylic acid residue; and a bio-derived softener, it has excellent mechanical properties as well as high flexibility and is capable of enhancing formability, processability, and productivity at the same time.

In addition, the biodegradable polyester resin and a biodegradable sheet or film comprising the same have an advantage in that they can be expanded to a variety of applications such as packaging materials, garbage bags, mulching films, and disposable products that require excellent durability and elongation at break, as well as lap films, industrial stretch films, molding films, lamination of architectural interiors, and applications requiring three-dimensional molding such as 3D molding that requires high flexibility.

Meanwhile, in the process for preparing a biodegradable polyester resin according to an embodiment, a bio-derived softener is added during the esterification reaction, during the polycondensation reaction, or both, whereby it can be copolymerized with the polymer units and can be stably plasticized in the molecules, thereby maximizing the flexibility of the biodegradable polyester resin and further enhancing the overall physical properties.

## Brief Description of the Drawing

Fig. 1 schematically shows the process for preparing a biodegradable polyester resin according to an embodiment.

Fig. 2a is a side view before the pressing of a thermoforming press used to measure the forming depth of a biodegradable polyester film according to an embodiment.

Fig. 2b is a side view after the pressing of a thermoforming press used to measure the forming depth of a biodegradable polyester film according to an embodiment.

Fig. 3 is a plan view of the lower plate of a thermoforming press used to measure the forming depth of a biodegradable polyester film according to an embodiment.

## Best Mode for Carrying out the Invention

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In an embodiment of the present invention, there is provided a biodegradable polyester resin, which comprises a first repeat unit comprising a first diol residue and an aromatic dicarboxylic acid residue and a second repeat unit comprising a second diol residue and an aliphatic dicarboxylic acid residue; and a bio-derived softener.

According to an embodiment of the present invention, as the biodegradable polyester resin comprises a first repeat unit comprising a first diol residue and an aromatic dicarboxylic acid residue and a second repeat unit comprising a second diol residue and an aliphatic dicarboxylic acid residue, it has excellent tensile strength and flexibility at the same time. As it comprises a bio-derived softener, it is environmentally friendly and can further reduce Young's modulus and $F_{100}$, further increase elongation at break, and adjust pinhole resistance and forming depth, thereby maximizing flexibility. As a result, when a biodegradable polyester sheet, film, or molded article comprising the biodegradable polyester resin is prepared, it is of technical significance in that stretching is readily carried out, and formability is enhanced, thereby further enhancing formability, processability, and productivity.

Specifically, the biodegradable polyester resin comprises the first and second repeat units having specific components, and it comprises a bio-derived softener. Thus, it is possible to adjust Young's modulus, $F_{100}$, forming depth,

pinhole resistance, and elongation at break, along with enhanced biodegradability and an appropriate level of tensile strength, thereby maximizing flexibility; and it is possible to improve thermal shrinkage rate to enhance thermal resistance.

In addition, such composite properties as post-workability (PW), ductility rate, and thermal resistance ductility index (TRDI) obtained by controlling these properties in combination can be achieved at an optimal level.

Furthermore, in the preparation of a biodegradable polyester film using the biodegradable polyester resin, a blown film process is a very important production process. In such a blown film process, a bubble is well formed, and a final product can be prepared without the fusion of the film surfaces during winding, whereby productivity, processability, and formability can be enhanced at the same time. Therefore, it can be expanded to various applications such as lap films, industrial stretch films, molding films, lamination of architectural interiors, and applications requiring three-dimensional molding such as 3D molding that requires high flexibility.

Hereinafter, the biodegradable polyester resin will be described in more detail.

**Biodegradable polyester resin**

The biodegradable polyester resin according to an embodiment of the present invention comprises a first repeat unit comprising a first diol residue and an aromatic dicarboxylic acid residue and a second repeat unit comprising a second diol residue and an aliphatic dicarboxylic acid residue.

The first and second diol residues each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, sebacic acid, or a derivative thereof.

The biodegradable polyester resin having the above configuration may enhance the biodegradability, water degradability, and physical properties of a biodegradable polyester sheet, film, or molded article prepared from the same.

The first and second diol residues may each comprise a residue of 1,4-butanediol, 1,2-ethanediol, 1,3-propanediol, or a derivative thereof, specifically, 1,4-butanediol, 1,2-ethanediol, or a derivative thereof, more specifically, 1,4-butanediol or a derivative thereof. For example, when the first and second diol residues each comprise 1,4-butanediol, it may be more advantageous for the enhancement in the biodegradability, water degradability, and physical properties of the biodegradable polyester resin or a biodegradable polyester sheet, film, or molded article prepared from the same.

In addition, when the first and second diol residues each comprise the above residue, the aromatic dicarboxylic acid and the aliphatic dicarboxylic acid can be more uniformly reacted with the diol components according to the preparation process of the present invention, and the reaction efficiency can be increased; thus, it may be more advantageous for preparing a biodegradable polyester resin having the above physical properties.

The biodegradable polyester resin according to an embodiment of the present invention may comprise a first repeat unit comprising a residue of 1,4-butanediol or a derivative thereof and a residue of terephthalic acid or a derivative thereof; and a second repeat unit comprising a residue of 1,4-butanediol or a derivative thereof and a residue of adipic acid or a derivative thereof. When the first repeat unit and the second repeat unit satisfy the above configurations, it may be more advantageous for providing a biodegradable polyester sheet or film having excellent biodegradability and water degradability.

Meanwhile, in order to provide a biodegradable polyester resin with excellent productivity, processability, and formability and to simultaneously enhance the biodegradability and water degradability of a biodegradable polyester sheet or film prepared from the same, it is very important to control the number of repeat units that constitute the biodegradable polyester resin.

The number of the first repeat unit may be 100 to 500, 130 to 450, 140 to 400, 145 to 350, 145 to 300, 145 to 250, or 150 to 250.

The number of the second repeat unit may be 100 to 500, 130 to 450, 140 to 400, 145 to 350, 145 to 300, 145 to 250, or 150 to 250.

When the number of the first repeat unit and the number of the second repeat unit each satisfy the above ranges, it is possible to achieve the desired molecular weight of the biodegradable polyester resin, to enhance processability and physical properties, and to further enhance the mechanical properties, thermal resistance, and biodegradability of a biodegradable polyester sheet, film, or molded article prepared from the same. If the number of the first repeat unit and/or the second repeat unit is too small, the molecular weight of the biodegradable polyester resin is also reduced, making it difficult to achieve the desired physical properties.

Meanwhile, the biodegradable polyester resin according to an embodiment of the present invention comprises a bio-derived softener.

In general, a biodegradable polyester resin, such as polybutylene adipate terephthalate (PBAT), that does not comprise a bio-derived softener is flexible in its nature. However, in order to be used as lap films, industrial stretch films, molding films, lamination of architectural interiors, and applications requiring three-dimensional molding such as 3D molding that requires high flexibility, it is necessary to maximize flexibility while maintaining an appropriate level of

strength.

As the biodegradable polyester resin according to an embodiment of the present invention comprises the bio-derived softener, it has little impact on the changes in modulus, tensile strength, and thermal shrinkage rate; thus, it is possible to further reduce Young's modulus and $F_{100}$, further increase elongation at break, and adjust pinhole resistance and forming depth, without impairing their effects. Therefore, it is possible to achieve high flexibility while maintaining an appropriate level of mechanical properties and thermal resistance. It has a significant feature in that, as a result, formability, processability, and productivity can be enhanced at the same time.

Specifically, the bio-derived softener is an environmentally friendly substance that can be obtained from environmentally friendly vegetable fat components. It may comprise a polar segment that is bonded to a polymer chain and a non-polar segment that broadens the spacing of polymer chains to impart flexibility.

According to an embodiment of the present invention, the bio-derived softener is not compounded with the biodegradable polyester resin by mixing; rather, it is added during the polymerization of the biodegradable polyester resin, for example, during the esterification reaction, during the polycondensation reaction, or both, whereby the polymer units and the bio-derived softener can be copolymerized, and it can be stably plasticized in the molecules, thereby effectively achieving the effect desired in the present invention.

Specifically, the bio-derived softener may be added during the esterification reaction step, during the polycondensation reaction step, or both, to participate in the reaction.

In such a case, (i) the bio-derived softener is copolymerized with the polymer units of the resin, so that a slight bonding force between the softener and the resin molecules may exist, and the softener acts as a lubricant between the polymers for the resistance to deformation of the resin caused by intermolecular friction, thereby facilitating processability; (ii) the softener dissolves or swells the connection points of the polymer to resist the deformation of the resin generated from the inside of the three-dimensional crossstructure, thereby facilitating the fluidity of the resin. Further, (iii) the free volume can be increased due to an increase in the number and length of the polymer branch chains of the resin or due to small intermolecular attraction, and the increase in free volume due to a low molecular weight compound having compatibility can further increase flexibility.

In addition, in the polyester resin, the softener can be inserted as side chains, both ends, or random branches of the copolymer to form a random copolymer, thereby maximizing the flexibility of the polyester resin and further enhancing the overall physical properties.

The bio-derived softener according to an embodiment of the present invention may comprise a saturated linear or branched hydrocarbon, an unsaturated linear or branched hydrocarbon, or a combination thereof.

Specifically, the bio-derived softener may comprise a repeat unit represented by Formula 1, a repeat unit represented by Formula 2, or a combination thereof:

[Formula 1]

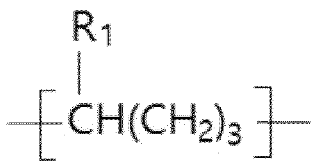

[Formula 2]

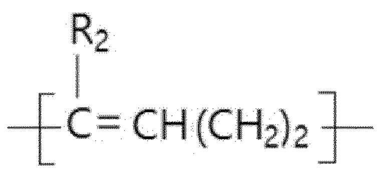

In Formulae 1 and 2, $R_1$ and $R_2$ are each independently an alkyl group of $C_1$ to $C_4$.

Meanwhile, the bio-derived softener may have a viscosity of, for example, 5 cP to 80 cP, for example, 5 cP to 60 cP, for example, 5 cP to 50 cP, or, for example, 10 cP to 40 cP, at a temperature of 20°C.

The bio-derived softener may have a molar mass of, for example, 250 g/mole to 1,000 g/mole, for example, 250 g/mole to 900 g/mole, for example, 250 g/mole to 800 g/mole, or, for example, 30 g/mole to 600 g/mole.

In addition, the bio-derived softener may have a refractive index of, for example, 0.8 to 2.5, for example, 1.0 to 2.0, for example, 1.0 to 1.8, or, for example, 1.0 to 1.7. If the refractive index of the bio-derived softener is outside the

above range, when a film is prepared, it may be colored area by area due to light distortion, which may adversely affect the quality.

More specifically, the bio-derived softener may comprise a compound of Formula 3, a compound of Formula 4, or a combination thereof:

[Formula 3]

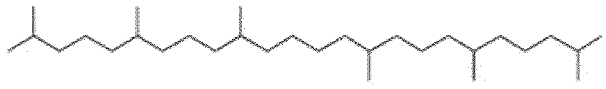

[Formula 4]

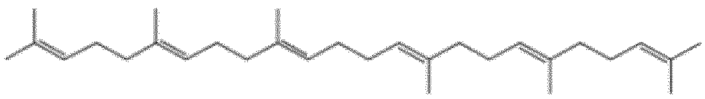

For example, the bio-derived softener may comprise squalane, squalene, or a combination thereof.

Both squalane and squalene can be obtained from environmentally friendly vegetable fat components, are stable to oxidation reactions, can act as environmentally friendly plasticizers, act as lubricants between polymers to loosen the chains between the polymers, and, at the same time, the softener can be inserted into the polymer chains as side chains.

Thus, when the bio-derived softener comprises squalane, squalane, or a combination thereof, flexibility can be significantly enhanced by further enhancing pinhole resistance and forming depth.

Meanwhile, according to an embodiment of the present invention, the content of the bio-derived softener contained in the biodegradable polyester resin may be important.

That is, the physical properties of the biodegradable polyester resin and a biodegradable polyester sheet, film, or molded article comprising the same may vary depending on the content of the bio-derived softener contained in the biodegradable polyester resin.

Specifically, the biodegradable polyester resin may comprise the bio-derived softener in an amount of 10 ppm or more by weight.

More specifically, the biodegradable polyester resin may comprise the bio-derived softener in an amount of, for example, 10 ppm to 10,000 ppm, for example, 10 ppm to 5,000 ppm, for example, 10 ppm to 3,000 ppm, for example, 10 ppm to 2,000 ppm, for example, 10 ppm to 1,500 ppm, for example, 10 ppm to 1,300 ppm, for example, 10 ppm to 1,200 ppm, for example, 20 ppm to 1,000 ppm, for example, 20 ppm to 800 ppm, for example, 50 ppm to 800 ppm, for example, 20 ppm to 600 ppm, for example, 20 ppm to 500 ppm, for example, 30 ppm to 400 ppm, for example, 20 ppm to 300 ppm, or, for example, 30 ppm to 300 ppm, by weight.

If the content of the bio-derived softener contained in the biodegradable polyester resin is too small, the effect desired in the present invention may be minimal. If the content is too high, tensile strength decreases and heat shrinkage increases, which may reduce strength and thermal resistance, while flexibility increases. In addition, if the content of the bio-derived softener is too high, a surface migration phenomenon may take place in which the softener migrates onto the surface of a biodegradable polyester sheet, film, or molded article prepared from the biodegradable polyester resin.

In particular, as the biodegradable polyester resin comprises the bio-derived softener, the elongation at break, pinhole resistance, and forming depth can be adjusted without impairing the modulus, tensile strength, and thermal shrinkage rate, thereby providing high flexibility while maintaining an appropriate level of mechanical properties and thermal resistance, which can further enhance formability.

**Physical properties of the biodegradable polyester resin and a biodegradable polyester sheet and film prepared therefrom**

When the biodegradable polyester resin comprises a first repeat unit comprising a first diol residue and an aromatic dicarboxylic acid residue and a second repeat unit comprising a second diol residue and an aliphatic dicarboxylic acid residue; and a bio-derived softener according to an embodiment of the present invention, it has high flexibility while maintaining excellent strength and is capable of achieving excellent thermal resistance, formability, processability, and productivity at the same time.

In particular, as the type of the bio-derived softener, its content, and the timing of adding the bio-derived softener are controlled, it is possible to adjust the tensile strength, Young's modulus, $F_{100}$, elongation at break, forming depth, thermal shrinkage rate, number of pinholes, and melt index of the biodegradable polyester resin. Such composite properties as post-workability (PW), ductility rate, and thermal resistance ductility index (TRDI) obtained from these properties can also be achieved at an optimal level.

In the biodegradable polyester resin according to an embodiment of the present invention, the post-workability (PW) represented by the following Equation 1 is 20% or more:

[Equation 1]

$$\text{Post-workability (PW, \%)} = \frac{FD_{80}}{PR} \times 100\ (\%)$$

In Equation 1, $FD_{80}$ is the forming depth (cm), excluding the unit, measured by subjecting a biodegradable polyester film having a width of 5 cm, a length of 5 cm, and a thickness of 50 μm prepared from the biodegradable polyester resin to thermal pressing with a thermoforming press at 80°C for 30 seconds, and

PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

The post-workability (PW) represented by Equation 1 is expressed as the ratio of the forming depth ($FD_{80}$) to the number of pinholes (PR) of the biodegradable polyester film, which may be an indicator of the flexibility, formability, and processability of the biodegradable polyester film prepared from the biodegradable polyester resin.

The larger the ratio of the forming depth ($FD_{80}$) to the number of pinholes (PR) of the biodegradable polyester film, the more excellent the post-workability (PW).

That is, the larger the forming depth ($FD_{80}$) and the lower the number of pinholes, the higher the post-workability (PW). In such a case, a biodegradable polyester sheet, film, or molded article prepared from the polyester resin has high flexibility and can enhance formability, processability, and productivity at the same time.

Thus, when the biodegradable polyester resin whose post-workability (PW) is adjusted to a certain range is used, it can be expanded to a variety of applications such as lap films, industrial stretch films, molding films, lamination of architectural interiors, and applications requiring three-dimensional molding such as 3D molding that requires high flexibility and excellent formability.

Specifically, the post-workability (PW) of the biodegradable polyester resin may be, for example, 20% or more, for example, 30% or more, for example, 40% or more, for example, 50% or more, for example, 55% or more, for example, 56% or more, for example, 70% or more, for example, 80% or more, for example, 90% or more, or, for example, 100% or more. Specifically, the post-workability (PW) of the biodegradable polyester resin may be, for example, 20% to 300%.

When the post-workability (PW) of the biodegradable polyester resin satisfies the above range, the flexibility of a biodegradable polyester sheet, film, or molded article prepared from the polyester resin can be maximized, thereby further enhancing formability. If the post-workability (PW) of the biodegradable polyester resin is too low, the forming depth ($FD_{80}$) may decrease or the number of pinholes (PR) may increase, resulting in reduced flexibility, poor formability, or the appearance of the film or molded article may also be defective. In particular, the blow moldability in a blown film process using the biodegradable polyester resin may be deteriorated, for example, a bubble is not properly shaped, is stretched to one side to be oblique, or bursts. The biodegradable polyester resin, sheet, or film may be bonded to the surface of the mold of an injection molding machine during injection molding, making it difficult to be detached, or shape deformation such as heat shrinkage may take place.

Meanwhile, the forming depth ($FD_{80}$) in Equation 1 refers to the forming depth (cm) processed after thermal pressing with a thermoforming press. Its value may increase as the flexibility of a biodegradable polyester film prepared from the biodegradable polyester resin increases.

Specifically, Fig. 2a is a side view before the pressing of a thermoforming press used to measure the forming depth of a biodegradable polyester film according to an embodiment. Fig. 2b is a side view after the pressing of a thermoforming press used to measure the forming depth of a biodegradable polyester film according to an embodiment.

Referring to Figs. 2a and 2b, the thermoforming press (1) for measuring the forming depth ($FD_{80}$) of the polyester film comprises a lower plate (10) and an upper plate (20), wherein the lower plate (10) may comprise a variety of cavities (11 to 15) with varying depths (Dsi to Dss), and the upper plate (20) may comprise a variety of protrusions (21 to 25) with varying lengths (Dsi to Dss), corresponding to the cavities (11 to 15) of the lower plate (10).

Here, since the cavities (11 to 15) of the lower plate (10) have a mold and a heat source is equipped in the mold, the polyester film (50) may be molded in conformity to the mold when the polyester film (50) is placed between the lower plate (10) and the upper plate (20) and thermally pressed by the press.

$Ds_1$ to $Ds_5$ may be configured to sequentially vary, for example, 1 cm, 3 cm, 5 cm, 7 cm, and 10 cm.

$d_{sd}$ is the diameter (size) of the cavities of the lower plate (10), and $d_{su}$ is the diameter (size) of the protrusions of the upper plate (20). $d_{sd}$ and $d_{su}$ may differ from each other in light of the thickness of the polyester film.

For example, the diameter ($d_{su}$) of the protrusions of the upper plate (20) may be designed as a square with a length ($d_s$) on one side of about 10 mm and/or a circle with a diameter ($d_c$) of about 10 mm.

In addition, referring to Fig. 3, in light of the thickness of the polyester film (50), the cavities of the lower plate (10) may be designed such that its base is a square with a length ($d_s$) on one side of about 10.3 mm and/or a circle (round shape) with a diameter ($d_c$) of about 10.3 mm. In Fig. 3, Dsi refers to the forming depth when the base of the cavity of the lower plate is a square, and Dei refers to the forming depth when the base of the cavity of the lower plate is a circle.

For example, since the upper plate (20) has a shape of 凸, and the lower plate (10) has a shape of 凹, the polyester film (50) is placed between the lower plate (10) and the upper plate (20) and thermally pressed at a certain temperature, for example, about 80°C for about 30 seconds. Then, the forming depth ($FD_{80}$), which is the depth (cm) to which the polyester film (50) has been molded without tearing or breakage, may be measured. Here, the greater the forming depth ($FD_{80}$), the greater the flexibility of the polyester film.

According to an embodiment of the present invention, the forming depth ($FD_{80}$) may be, for example, 4 cm or more, for example, 4.5 cm or more, for example, 5 cm or more, for example, 5.5 cm or more, or, for example, 6 cm or more, and may specifically be, for example, 4 cm to 20 cm, for example, 5 cm to 10 cm, or, for example, 5 cm to 8 cm.

When the forming depth ($FD_{80}$) satisfies the above range, the flexibility of a biodegradable sheet, film, or molded article prepared from the biodegradable polyester resin can be enhanced, and it may be more advantageous for increasing the post-workability (PW) of the biodegradable polyester resin. As a result, processability, formability, and productivity can be enhanced at the same time.

In addition, the number of pinholes (PR) in Equation 1 refers to the number of pinholes measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, placing the film flatly on a blank paper, applying an oily ink on the film using a doctor blade, removing the film, and counting the number of ink dots appearing on the blank paper. Its value may decrease as the flexibility of a biodegradable polyester film prepared from the biodegradable polyester resin increases.

According to an embodiment of the present invention, the number of pinholes (PR) may be, for example, 25 or fewer, for example, 20 or fewer, for example, 18 or fewer, for example, 15 or fewer, for example, 12 or fewer, or, for example, 10 or fewer.

When the number of pinholes (PR) satisfies the above range, the flexibility of a biodegradable sheet, film, or molded article prepared from the biodegradable polyester resin can be enhanced, it may be more advantageous for adjusting the post-workability (PW) of the biodegradable polyester resin to the range described above, and processability, formability, and productivity can be enhanced at the same time.

Meanwhile, the biodegradable polyester resin may have a ductility rate of 80% or less as represented by the following Equation 2:

[Equation 2]

$$\text{Ductility rate} = \frac{PR}{TS} \times 100\ (\%)$$

In Equation 2, TS is the tensile strength ($kgf/mm^2$), excluding the unit, measured by cutting a biodegradable polyester sheet prepared from the biodegradable polyester resin to prepare a specimen according to ASTM D638 V-type and testing the specimen at a tensile speed of 100 mm/minute using a universal test machine (UTM), and

PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, placing the film on a blank paper, applying an oily ink on the film using a doctor blade, removing the film, and counting the number of ink dots appearing on the blank paper, which indicates the number of pinholes.

The ductility rate is a ratio, in percentage, of the number of pinholes of a biodegradable polyester film prepared from the biodegradable polyester resin to the tensile strength of a biodegradable polyester sheet prepared from the biodegradable polyester resin, which may be an indicator of flexibility over strength.

That is, the greater the tensile strength (TS) when measured using a biodegradable sheet prepared from the biodegradable polyester resin, and the smaller the number of pinholes (PR) of a biodegradable polyester film prepared from the biodegradable polyester resin, the lower the value of flexibility.

Specifically, the ductility rate may be, for example, 5% to 80%, for example, 5% to 70%, for example, 5% to

60%, for example, 5% to 50%, for example, 5% to 40%, or, for example, 10% to 30%.

When the ductility rate satisfies the above range, flexibility can be maximized while maintaining an appropriate level of strength of a biodegradable polyester sheet, film, or molded article prepared from the biodegradable polyester resin, and formability, processability, and productivity can be enhanced, whereby it is possible to be expanded to various applications.

The tensile strength of a biodegradable polyester sheet prepared from the biodegradable polyester resin used in Equation 2 may be 25 MPa or more.

A biodegradable polyester sheet prepared from the biodegradable polyester resin is cut to prepare a specimen in accordance with ASTM D638 V-type. The specimen is then tested using INSTRON's universal testing machine (UTM, model name 4206-001) at a tensile speed of 100 mm/minute to calculate the tensile strength by the program built in the equipment.

The tensile strength may be, for example, 25 MPa to 50 MPa, for example, 28 MPa to 49 MPa, for example, 30 MPa to 45 MPa, for example, 32 MPa to 43 MPa, for example, 33 MPa to 40 MPa, or, for example, 34 MPa to 40 MPa. When the tensile strength satisfies the above range, it is more advantageous for adjusting the ductility rate of the biodegradable polyester resin to the above range, and productivity, processability, and formability can be enhanced at the same time.

The number of pinholes (PR) used in Equation 2 is as described above.

Meanwhile, the biodegradable polyester resin according to an embodiment of the present invention may have a thermal resistance ductility index (TRDI) of 4.5 or more as represented by Equation 3:

[Equation 3]

$$\text{Thermal resistance ductility index (TRDI)} = \frac{Eb\ (\%) - S_{80}\ (\%)}{100\ (\%)}$$

In Equation 3, Eb refers to the elongation at break measured by cutting a biodegradable polyester sheet prepared from the biodegradable polyester resin to prepare a specimen in accordance with ASTM D638 V-type and testing the specimen at a tensile speed of 100 mm/minute using a universal test machine (UTM), and

$S_{80}$ refers to the thermal shrinkage rate ($S_{80}$) represented by Equation 4,

[Equation 4]

$$\text{Thermal shrinkage rate } (S_{80}) = \frac{L_{25} - L_{80}}{L_{25}} \times 100\ (\%)$$

In Equation 4, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

The thermal resistance ductility index (TRDI) is a value obtained by dividing the difference between the elongation at break (Eb) of a biodegradable polyester sheet prepared from the biodegradable polyester resin and the thermal shrinkage rate ($S_{80}$) of a biodegradable polyester film prepared from the biodegradable polyester resin, which may refer to a composite performance of thermal resistance and flexibility.

That is, the thermal resistance ductility index (TRDI) may be higher as the elongation at break indicating flexibility is higher, and the heat shrinkage represented by Equation 4 indicating thermal resistance is lower.

Specifically, thermal resistance ductility index (TRDI) may be, for example, 4.5 or more, for example, 5.0 or more, for example, 5.5 or more, or 6.6 or more, and, specifically, 4.5 to 10.0, 5.0 to 10.0, 5.0 to 8.0, or 5.0 to 7.0.

When the thermal resistance ductility index (TRDI) satisfies the above range, the thermal resistance and flexibility of a biodegradable polyester sheet, film, and molded article prepared from the biodegradable polyester resin can be enhanced at the same time. If the thermal resistance ductility index (TRDI) is less than 4.5, thermal resistance is deteriorated, whereby the thermal shrinkage rate ($S_{80}$) of the biodegradable polyester film may be excessively increased. In particular, the blow moldability in a blown film process using the biodegradable polyester resin may be deteriorated, for example, a bubble is not properly shaped, is stretched to one side to be oblique, or bursts. The biodegradable polyester resin, sheet, or film may be bonded to the surface of the mold of an injection molding machine during injection molding, making it difficult to be detached, or shape deformation such as heat shrinkage may take place.

According to an embodiment of the present invention, the thermal resistance ductility index (TRDI) can be adjusted to the above range with respect to the content of a bio-derived softener.

In particular, as the content of the bio-derived softener increases, the elongation at break (Eb) and the thermal shrinkage rate ($S_{80}$) may increase together; thus, it may be the most important to control the thermal shrinkage rate ($S_{80}$) to an appropriate range while enhancing the elongation at break (Eb).

For example, when the content of the bio-derived softener in the biodegradable polyester resin is 10 ppm to less than 50 ppm, the thermal resistance ductility index (TRDI) may be, for example, 4.5 to less than 6.0 or 4.5 to less than 5.7.

In addition, when the content of the bio-derived softener in the biodegradable polyester resin is 50 ppm to less than 800 ppm, the thermal resistance ductility index (TRDI) may be, for example, 5.0 to 8.0 or 5.7 to less than 7.5.

In addition, when the content of the bio-derived softener in the biodegradable polyester resin is 800 ppm to 1,500 ppm, the thermal resistance ductility index (TRDI) may be, for example, 6.5 to 9.0 or 7.5 to 10.0.

When the thermal resistance ductility index (TRDI) satisfies the above range with respect to the content of the bio-derived softener in the biodegradable polyester resin, it is advantageous that the thermal shrinkage rate ($S_{80}$) can be controlled to an appropriate range while enhancing the elongation (Eb) at break, thereby optimizing flexibility and thermal resistance at the same time.

According to an embodiment of the present invention, the elongation at break (Eb) used in Equation 3 refers to the amount of elongation of a specimen right before its breakage measured by cutting a biodegradable polyester sheet prepared from the biodegradable polyester resin to prepare the specimen in accordance with ASTM D638 V-type and testing the specimen at a tensile speed of 100 mm/minute using a universal test machine (UTM). The increase in the value of elongation at break (Eb) may mean an increase in elongation capacity.

The elongation at break (Eb) may be, for example, 500% or more, for example, 520% or more, for example, 550% or more, for example, 580% or more, for example, 590% or more, or, for example, 600% or more. As the elongation at break (Eb) increases, the elongation of the sheet may increase, and the formability may be further enhanced.

Meanwhile, the thermal shrinkage rate ($S_{80}$) represented by Equation 4 is a value obtained by converting the degree of heat shrinkage of a biodegradable polyester film specimen at a hot air temperature of 80°C into a percentage. It is a value calculated as a percentage of the change between the initial length of a biodegradable polyester film specimen and the length of the specimen after it has been left in a hot air oven relative to the initial length of the specimen.

The thermal shrinkage rate ($S_{80}$) may be calculated by cutting a biodegradable polyester film into 150 mm in length and 2 cm in width regardless of the direction to prepare a specimen and then measuring the initial length thereof at room temperature and the length of the biodegradable polyester film specimen after it has been left for 5 minutes in a hot air oven at 80°C.

The thermal shrinkage rate ($S_{80}$) may be 50% or less, 49% or less, 48% or less, 45% or less, 43% or less, 42% or less, 40% or less, 38% or less, or 35% or less.

If the thermal shrinkage rate ($S_{80}$) satisfies the above range or less, the degree of heat shrinkage is small at a hot air temperature of 80°C or higher, and the blow moldability or injection moldability can be further enhanced; at the same time, it is possible to improve the physical properties of a biodegradable polyester film or molded article. Thus, it can be more advantageous for various applications.

In addition, although a lower thermal shrinkage rate ($S_{80}$) is advantageous in terms of thermal resistance and formability, it may be important to simultaneously enhance flexibility in a range in which the thermal shrinkage rate ($S_{80}$) does not excessively increase.

Meanwhile, the Young's modulus (YM100) measured using a biodegradable polyester sheet prepared from the biodegradable polyester resin may be, for example, 0.1 kgf/mm$^2$ to 10 kgf/mm$^2$, for example, 0.1 kgf/mm2 to 9.9 kgf/mm$^2$, for example, 0.1 kgf/mm$^2$ to 9.0 kgf/mm$^2$, for example, 0.1 kgf/mm$^2$ to 8.5 kgf/mm$^2$, for example, 0.2 kgf/mm$^2$ to 8.3 kgf/mm$^2$, for example, 0.5 kgf/mm$^2$ to 8.3 kgf/mm$^2$, for example, 1.0 kgf/mm$^2$ to 8.5 kgf/mm$^2$, for example, 2.0 kgf/mm$^2$ to 8.5 kgf/mm$^2$, or, for example, 4.0 kgf/mm$^2$ to 8.5 kgf/mm$^2$.

When the Young's modulus (YM100) satisfies the above range, flexibility can be enhanced, and formability, processability, and productivity can be enhanced at the same time. In addition, the lower the Young's modulus within the above range, the better the flexibility. However, it may also be important to control it to an appropriate range. If the Young's modulus (YM100) falls outside the above range, stiffness increases, whereby it may be easily fractured or broken by an external impact.

The biodegradable polyester sheet is cut to prepare a specimen in accordance with ASTM D638 V-type. The specimen is then tested using INSTRON's universal testing machine (UTM, model name 4206-001) at a tensile speed of 100 mm/minute to calculate the Young's modulus (YM100) as the slope of the straight line at an elongation at break of 100%. The Young's modulus is a mechanical property for measuring the flexibility of the biodegradable polyester sheet specimen. It may indicate elastic modulus defining the relationship between the stress (force per unit area) and the strain of a linear elastic material in a uniaxial deformation region, and it may be a measure of flexibility and formability according to an embodiment of the present invention.

Meanwhile, $F_{100}$ measured using a biodegradable polyester sheet prepared from the biodegradable polyester resin may be, for example, 0.1 kgf/mm$^2$ to 1.3 kgf/mm$^2$, for example, 0.1 kgf/mm$^2$ to 1.2 kgf/mm$^2$, for example, 0.2

$kgf/mm^2$ to 1.1 $kgf/mm^2$, for example, 0.3 $kgf/mm^2$ to 1.1 $kgf/mm^2$, for example, 0.4 $kgf/mm^2$ to 1.1 $kgf/mm^2$, for example, 0.5 $kgf/mm^2$ to 1.1 $kgf/mm^2$, for example, 0.6 $kgf/mm^2$ to 1.1 $kgf/mm^2$, or, for example, 0.7 $kgf/mm^2$ to 1.1 $kgf/mm^2$.

The biodegradable polyester sheet is cut to prepare a specimen in accordance with ASTM D638 V-type. The specimen is then tested using INSTRON's universal testing machine (UTM, model name 4206-001) at a tensile speed of 100 mm/minute to calculate $F_{100}$ as the load applied when elongated by 100%.

When the above range is satisfied, flexibility can be enhanced, and formability, processability, and productivity can be enhanced at the same time. In addition, the lower the $F_{100}$ within the above range, the better the flexibility. However, it may also be important to control it to an appropriate range for expansion to various applications. If $F_{100}$ falls outside the above range, stiffness increases, whereby it may be easily fractured or broken by an external impact.

Meanwhile, the biodegradable polyester resin may have a melt index (g/10 minutes) of, for example, 10 g/10 minutes or less, for example, 9 g/10 minutes or less, for example, 7 g/10 minutes or less, for example, 6 g/10 minutes or less, for example, 5.5 g/10 minutes or less, or 4 g/10 minutes to 10 g/10 minutes.

The melt index (g/10 minutes) refers to the melt flowability of a biodegradable polyester resin at a constant load and temperature. When the above range is satisfied, it may be advantageous in terms of formability, processability, and productivity.

Meanwhile, the biodegradable polyester resin according to an embodiment of the present invention has excellent blow moldability.

In general, in the preparation of a biodegradable polyester film, the blown film process is a very important production process. That is, in a blown film process, it is necessary that a bubble is formed well and that a final product is prepared without bonding between the film surfaces during winding. For this purpose, it is important to make the biodegradable polyester resin have an appropriate level of productivity, processability, and formability, as well as physical properties.

According to an embodiment of the present invention, as a bio-derived softener is used, it is possible to appropriately adjust the tensile strength, Young's modulus, $F_{100}$, forming depth, pinhole resistance, and elongation at break, thereby further enhancing the blow moldability.

Further, since the bio-derived softener acts as an environmentally friendly plasticizer, a biodegradable polyester sheet, film, and molded article prepared using the same are excellent in biodegradability and highly desirable in terms of environmental friendliness; thus, they can be applied to various fields.

The configuration and physical properties of the biodegradable polyester resin according to an embodiment of the present invention can be efficiently achieved by using the process for preparing a biodegradable polyester resin according to an embodiment of the present invention.

Hereinafter, the process for preparing a biodegradable polyester resin will be described in detail.

## Process for preparing a biodegradable polyester resin

According to another embodiment of the present invention, there is provided a process for preparing a biodegradable polyester resin that comprises a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, and a bio-derived softener is added during the esterification reaction, during the polycondensation reaction, or both.

According to an embodiment of the present invention, in the process for preparing a biodegradable polyester resin, a diol component and an aromatic dicarboxylic acid are mixed to obtain a slurry; the slurry is subjected to an esterification reaction to obtain a prepolymer; and the prepolymer is subjected to a polycondensation reaction. In particular, the bio-derived softener is added during the esterification reaction, during the polycondensation reaction, or both. As a result, the bio-derived softener participates in the reaction and copolymerizes with the polyester resin, whereby it is possible to further enhance the mechanical properties of the polyester resin, a biodegradable polyester sheet, film, or molded article prepared therefrom, as well as the flexibility thereof and to enhance formability, processability, and productivity at the same time.

If the bio-derived softener is compounded with the biodegradable polyester resin, without adding it during the esterification reaction, during the polycondensation reaction, or both, the bio-derived softener is not copolymerized with the polyester resin units, rather it is simply mixed therewith. Since it is not plasticized in the molecules, there may be difficulties in achieving the effect desired in the present invention.

However, according to an embodiment of the present invention, the bio-derived softener is added during the polymerization of a polyester resin, whereby the bio-derived softener is copolymerized with the polymer units and can

be stably plasticized in the molecules. In the polyester resin, the softener can be inserted as side chains, both ends, or random branches of the copolymer to form a random copolymer, thereby maximizing the flexibility of the polyester resin and further enhancing the overall physical properties.

Referring to Fig. 1, the process for preparing a biodegradable polyester resin (S100) comprises a first step (S 110) of mixing a diol component and an aromatic dicarboxylic acid to obtain a slurry.

That is, the first step is a step of mixing a diol component and an aromatic dicarboxylic acid to form a slurry therefrom.

As a diol component and an aromatic dicarboxylic acid are mixed and formed into a slurry, the diol component and the aromatic dicarboxylic acid can be uniformly reacted, and it is effective for expediting the esterification reaction, whereby the reaction efficiency can be increased.

In particular, if an aromatic dicarboxylic acid such as terephthalic acid has complete crystallinity and is in a powder form, its solubility in the diol is very low, whereby it may be difficult to carry out a homogeneous reaction. Thus, the step of forming a slurry may play a very important role in providing a biodegradable polyester resin, sheet, and film having excellent physical properties according to an embodiment of the present invention and enhancing the reaction efficiency.

In addition, in the case where all of a diol component, an aromatic dicarboxylic acid, and an aliphatic dicarboxylic acid are mixed and subjected to an esterification reaction, without the step of first mixing the diol component and the aromatic dicarboxylic acid to form a slurry, the reaction of the diol component and the aliphatic dicarboxylic acid may be preferentially carried out. Thus, it may be difficult to control the number of the first repeat unit and the second repeat unit as desired in the present invention.

According to an embodiment of the present invention, in the case where the aromatic dicarboxylic acid is terephthalic acid, terephthalic acid is a white crystal that has perfect crystallinity and sublimes at around 300°C under normal pressure without a melting point, and it has very low solubility in the diol, making it difficult to carry out a homogeneous reaction. In the case where the step of forming a slurry is performed before the esterification reaction, a uniform reaction can be induced by increasing the surface area thereof for reacting with the diol component in the solid matrix of terephthalic acid.

In addition, according to an embodiment of the present invention, in the case where the aromatic dicarboxylic acid is dimethyl terephthalate, dimethyl terephthalate may be made into a molten state at about 142°C to 170°C by the step of forming a slurry to be reacted with the diol. Thus, it is possible to carry out the esterification reaction more quickly and efficiently.

Meanwhile, in the first step of forming a slurry, the configuration and physical properties of the biodegradable polyester resin may vary depending on the particle size, particle size distribution, slurry-forming conditions, and the like of the aromatic dicarboxylic acid.

For example, the aromatic dicarboxylic acid may comprise terephthalic acid, and the terephthalic acid may have an average particle diameter (D50) of 400 μm or less, for example, 10 μm to 400 μm, in a particle size distribution (PSD) measured by a particle size analyzer Microtrac S3500 and a standard deviation of the average particle diameter (D50) of 100 or less. The standard deviation refers to the square root of variance.

The average particle diameter (D50) of terephthalic acid may be, for example, 20 μm to 200 μm, for example, 30 μm to 180 μm, for example, 50 μm to 150 μm, or, for example, 50 μm to 100 μm. When the average particle diameter (D50) of terephthalic acid satisfies the above range, it may be more advantageous in terms of solubility enhancement in diols and reaction rate.

If the average particle diameter (D50) of terephthalic acid is less than the above range, the average particle diameter is too small, so that primary particles may be undesirably converted to aggregated secondary particles. If the average particle diameter (D50) of terephthalic acid exceeds the above range, the average particle diameter is too large, so that the solubility in diols is reduced, thereby lowering the reaction rate, and it may be difficult to achieve a homogenization reaction.

In addition, the standard deviation of the average particle diameter (D50) may be 100 or less, for example, 5 to 90, for example, 5 to 80, for example, 5 to 70, for example, 10 to 70, for example, 15 to 70, or, for example, 15 to 50. When the standard deviation of the average particle diameter (D50) satisfies the above range, it may be more advantageous in terms of solubility enhancement in diols and reaction rate.

Further, when the average particle diameter (D50) and the standard deviation thereof each satisfy the above ranges, the reaction time can be shortened by 1.5 times or more, so that it may be preferable in terms of reaction efficiency.

When the aromatic dicarboxylic acid is dimethyl terephthalate, it may be used in a molten state, or, when measured in a particle state, it may have an average particle diameter (D50) and a standard deviation thereof similar to those of terephthalic acid.

In the slurry-forming process of the first step, the diol component and the aromatic dicarboxylic acid may be mixed and fed to a slurry agitator (tank).

According to an embodiment of the present invention, in the slurry-forming process of the first step, the agitating

force until the slurry is formed is very important; thus, the number and shape of agitating blades of the agitator and the conditions for forming the slurry are very important.

It may be more advantageous for producing an efficient agitating effect that the slurry agitator is, for example, an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous to each other. In such a case, a slurry without precipitation can be obtained. If the shape of the agitator and the number of the rotor blades do not satisfy the above conditions, when the diol and the aromatic dicarboxylic acid are initially mixed, the aromatic dicarboxylic acid may settle to the bottom, thereby causing phase separation.

The slurry-forming process of the first step may comprise mixing the diol component and the aromatic dicarboxylic acid and agitating the mixture at 60°C to 100°C and 50 rpm to 200 rpm for 10 minutes or longer, for example, 10 minutes to 200 minutes. When the above temperature, speed, and agitation time are satisfied, a homogeneous slurry can be obtained without phase separation, which is advantageous in terms of reaction efficiency, and the physical properties of the biodegradable polyester resin desired in the present invention can be efficiently obtained.

The diol component may comprise 1,4-butanediol, 1,2-ethanediol, 1,3-propanediol, or a derivative thereof.

Specifically, the diol component may comprise 1,4-butanediol, 1,2-ethanediol, 1,3-propanediol, or a derivative thereof in an amount of 95% by mole or more, 98% by mole or more, 99% by mole or more, or 100% by mole, based on the total number of moles of the diol components. As the diol component comprises 1,4-butanediol, 1,2-ethanediol, 1,3-propanediol, or a derivative thereof in the above amount, it is possible to enhance the biodegradability, water degradability, and physical properties of a biodegradable polyester resin or a biodegradable polyester sheet, film, or molded article prepared from the same.

The diol component may be added all at once or dividedly. For example, the diol component may be added dividedly at the time of mixing with an aromatic dicarboxylic acid and mixing with an aliphatic dicarboxylic acid.

The aromatic dicarboxylic acid may comprise one or more selected from the group consisting of terephthalic acid, dimethyl terephthalate, and a derivative thereof. Specifically, the aromatic dicarboxylic acid may be terephthalic acid or dimethyl terephthalate.

In addition, the aromatic dicarboxylic acid may be employed in an amount of 40% by mole to 60% by mole, 42% by mole to 58% by mole, 44% by mole to 58% by mole, 44% by mole to 57% by mole, 44% by mole to 55% by mole, 44% by mole to 53% by mole, 46% by mole to 52% by mole, 48% by mole to 52% by mole, or 50% by mole to 52% by mole, based on the total number of moles of the dicarboxylic acids.

When the molar ratio of the aromatic dicarboxylic acid is controlled to the above range, it is more advantageous for producing the effects of the present invention and to enhance the physical properties, biodegradability, and water degradation reduction rate of a biodegradable polyester sheet, film, or molded article prepared from the same.

Referring back to Fig. 1, the process for preparing a biodegradable polyester resin comprises a second step (S120) of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer.

In the esterification reaction of the second step, the reaction time may be shortened by using the slurry obtained in the first step. For example, the reaction time may be shortened by 1.5 times or more by using the slurry obtained in the first step.

The esterification reaction of the second step may be carried out at least once.

According to an embodiment of the present invention, in the esterification reaction, an aliphatic dicarboxylic acid, or a diol and an aliphatic dicarboxylic acid, may be added to the slurry to carry out the esterification reaction once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until water as a by-product theoretically reaches 95%. For example, the esterification reaction may be carried out for 0.5 hour to 4.5 hours, 0.5 hour to 3.5 hours, or 1 hour to 3 hours, but it is not limited thereto.

In the case where the esterification reaction is carried out once according to an embodiment of the present invention, the bio-derived softener may be added during the esterification reaction. For example, in the esterification reaction, when 95% of water as a by-product is discharged, the bio-derived softener may be added.

In the case where the esterification reaction is carried out twice according to another embodiment of the present invention, the bio-derived softener may be added during the first esterification reaction (ES step 1), and/or during the second esterification reaction (ES step 2). For example, in the first esterification reaction (ES step 1), when 95% of water as a by-product is discharged, the bio-derived softener may be added. Alternatively, in the second esterification reaction (ES step 2), when 95% of water as a by-product is discharged, the bio-derived softener may be added.

The amount of the bio-derived softener employed may be 10 ppm or more, for example, 10 ppm to 15,000 ppm, for example, 10 ppm to 12,000 ppm, for example, 12 ppm to 10,000 ppm, for example, 12 ppm to 8,000 ppm, for example, 12 ppm to 5,000 ppm, for example, 15 ppm to 4,000 ppm, for example, 20 ppm to 3,000 ppm, for example,

20 ppm to 2,500 ppm, for example, 30 ppm to 2,000 ppm, for example, 40 ppm to 2,000 ppm, for example, 50 ppm to 1,500 ppm, for example, 50 ppm to 1,000 ppm, for example, 50 ppm to 800 ppm, or, for example, 50 ppm to 600 ppm, based on the total weight of the diol, aromatic dicarboxylic acid, and aliphatic dicarboxylic acid.

When the bio-derived softener is used in the above range, the bio-derived softener can be contained in the polyester resin in an amount of 10 ppm or more, and the physical properties desired in the present invention can be achieved.

The types and properties of the bio-derived softener are as described above.

The prepolymer may have a number average molecular weight of 500 to 10,000 g/mole. For example, the number average molecular weight of the prepolymer may be 500 to 8,500 g/mole, 500 to 8,000 g/mole, 500 to 7,000 g/mole, 500 to 5,000 g/mole, or 500 to 2,000 g/mole. As the number average molecular weight of the prepolymer satisfies the above range, it is possible to efficiently increase the molecular weight of the polymer in the polycondensation reaction.

According to another embodiment of the present invention, the esterification reaction may be carried out two or more times as a step of subjecting the slurry to a first esterification reaction; and a step of adding an aliphatic dicarboxylic acid, or a diol and an aliphatic dicarboxylic acid, to the product of the first esterification reaction and carrying out a second esterification reaction.

In the case where the esterification reaction is carried out two or more times, it is possible to enhance the reaction stability and reaction uniformity as compared with the case where the esterification reaction is carried out once, and the desired ratio of the number of the first repeat unit to the number of the second repeat unit can be adjusted, leading to an advantage in that the effect according to an embodiment of the present invention can be efficiently produced.

The first esterification reaction and the second esterification reaction may each be carried out at 250°C or lower for 0.5 hour to 5 hours. Specifically, the first esterification reaction and the second esterification reaction may each be carried out at atmospheric pressure and 180°C to 250°C, 185°C to 240°C, or 200°C to 240°C, until water as a by-product theoretically reaches 95%. For example, the first esterification reaction and the second esterification reaction may each be carried out for 0.5 hour to 4.5 hours, 0.5 hour to 3.5 hours, or 1 hour to 3 hours, but it is not limited thereto.

Meanwhile, in the second step, the bio-derived softener may be added at the time of the esterification reaction, for example, if the first and second esterification reactions are carried out, at the time of the first esterification reaction, at the time of the second esterification reaction, or both. The amount and type of the bio-derived softener used are as described above.

According to an embodiment of the present invention, the addition of the bio-derived softener during the esterification reaction can induce stable plasticization, whereby it is possible to further enhance the elongation at break, pinhole resistance, and forming depth of a biodegradable polyester sheet, film, or molded article prepared from the biodegradable polyester resin, thereby achieving high flexibility. In addition, the stable plasticization makes it possible to readily achieve a polyester resin with a high viscosity molecular weight, and the viscosity is adequate and the blow moldability is enhanced, whereby the excellent physical properties desired in the present invention can be achieved without defects.

Specifically, the bio-derived softener is an environmentally friendly substance that can be obtained from environmentally friendly vegetable fat components. It may be composed of a polar segment that is bonded to a polymer chain, and a non-polar segment that broadens the spacing of polymer chains to impart flexibility.

According to an embodiment of the present invention, when the bio-derived softener is added at the time of the first esterification reaction (at the time of ES step 1), a catalyst may be optionally added prior to the esterification reaction, and the first esterification reaction is carried out in which the bio-derived softener may be added when 95% or more of the by-product is discharged and the first esterification reaction is almost completed so that an oligomer (reaction product) is produced. In such an event, a slight bonding force is generated between the oligomer and the bio-derived softener by the polar segment of the bio-derived softener, and the non-polar segment of the softener broadens the spacing of the oligomer chains to impart flexibility, thereby obtaining a plasticized oligomer. A diol and an aliphatic dicarboxylic acid may be added to the plasticized oligomer to carry out a second esterification reaction.

According to another embodiment of the present invention, when the bio-derived softener is added at the time of the second esterification reaction (at the time of ES step 2), a diol and a dicarboxylic acid, and optionally a catalyst, may be added to the reaction product obtained by the first esterification reaction, and the second esterification reaction is carried out in which the bio-derived softener may be added when 95% or more of the by-product is discharged and the second esterification reaction is almost completed so that a prepolymer is produced. In such an event, in the second esterification reaction, a slight bonding force is generated between the prepolymer and the bio-derived softener by the polar segment of the bio-derived softener, and the non-polar segment of the softener broadens the spacing of the prepolymer chains to impart flexibility, thereby obtaining a plasticized prepolymer.

According to an embodiment of the present invention, when the bio-derived softener has a linear structure, it may be more advantageous from the viewpoint of the reaction characteristics of the linear structure to be added at the time of the second esterification reaction in which an aliphatic dicarboxylic acid is added.

The prepolymer may have a number average molecular weight of 500 to 10,000 g/mole. For example, the

number average molecular weight of the prepolymer may be 500 to 8,500 g/mole, 500 to 8,000 g/mole, 500 to 7,000 g/mole, 500 to 5,000 g/mole, or 500 to 2,000 g/mole. As the number average molecular weight of the prepolymer satisfies the above range, it is possible to efficiently increase the molecular weight of the polymer in the polycondensation reaction, thereby further enhancing the strength characteristics.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

The aliphatic dicarboxylic acid may comprise adipic acid, succinic acid, sebacic acid, or a derivative thereof. Specifically, the aliphatic dicarboxylic acid may comprise adipic acid or succinic acid.

In addition, the aliphatic dicarboxylic acid may be employed in an amount of 40% by mole to 60% by mole, 42% by mole to 58% by mole, 42% by mole to 56% by mole, 43% by mole to 56% by mole, 45% by mole to 56% by mole, 47% by mole to 56% by mole, 48% by mole to 54% by mole, 48% by mole to 52% by mole, or, 48% by mole to 50% by mole, based on the total number of moles of the dicarboxylic acids.

When the content of the aliphatic dicarboxylic acid is controlled to the above range, it is possible to enhance the productivity, processability, and formability of the biodegradable polyester resin at the same time and to enhance the physical properties, biodegradability, and water degradability of a biodegradable polyester sheet, film, or molded article prepared from the same.

In particular, since the aliphatic dicarboxylic acid is composed of a linear chain, it may have an impact on the stickiness characteristics of the biodegradable polyester resin.

Specifically, if the content of the aliphatic dicarboxylic acid is excessive, the stickiness characteristics of the biodegradable polyester resin may be increased, thereby deteriorating processability.

In the second step, nanocellulose may be further added at the time of the esterification reaction, for example, if the first and second esterification reactions are carried out, at the time of the first esterification reaction, at the time of the second esterification reaction, or both.

Specifically, in the case where the esterification reaction is carried out once, nanocellulose may be further added at the time of the esterification reaction, for example, at the time when an aliphatic dicarboxylic acid is, or a diol and an aliphatic dicarboxylic acid are, added.

In addition, in the case where the esterification reaction is carried out two or more times, nanocellulose may be added at the time of the first esterification reaction, at the time of the second esterification reaction, or both. For example, nanocellulose may be added at the time of the second esterification reaction, that is, at the time when an aliphatic dicarboxylic acid is, or a diol and an aliphatic dicarboxylic acid are, added, or at the initial stage of the esterification reaction. In such a case, the nanocellulose may be efficiently dispersed. In particular, it is preferable in terms of physical properties such as strength and thermal properties of the biodegradable polyester resin to add nanocellulose, and it is possible to enhance the physical properties such as strength and biodegradability of a biodegradable polyester sheet, film, or molded article as well.

The nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose may have a diameter of 1 nm to 200 nm. For example, the diameter of the nanocellulose may be 1 nm to 150 nm, 1 nm to 120 nm, 1 nm to 100 nm, 1 nm to 95 nm, 5 nm to 90 nm, 10 nm to 80 nm, 1 nm to 50 nm, 5 nm to 45 nm, 10 nm to 60 nm, 1 nm to 10 nm, 10 nm to 30 nm, or 15 nm to 50 nm.

In addition, the nanocellulose may have a length of 5 nm to 10 μm. For example, the length of the nanocellulose may be 5 nm to 1 μm, 10 nm to 150 nm, 20 nm to 300 nm, 200 nm to 500 nm, 100 nm to 10 μm, 500 nm to 5 μm, 300 nm to 1 μm, or 1 μm to 10 μm.

As the diameter and length of the nanocellulose satisfy the above ranges, it is possible to further enhance the biodegradability and physical properties of the biodegradable polyester resin or a biodegradable polyester sheet, film, or molded article prepared from the same.

In addition, the nanocellulose may be pretreated with a bead mill or pretreated with ultrasound. Specifically, the nanocellulose may be obtained by pretreating nanocellulose dispersed in water with a bead mill or ultrasound.

First, the bead mill pretreatment may be carried out by a vertical mill or a horizontal mill as a wet milling apparatus. A horizontal mill is preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm. For example, the diameter of beads may be 0.3 mm to 0.9 mm, 0.4 mm to 0.8 mm, 0.45 mm to 0.7 mm, or 0.45 mm to

0.6 mm. As the diameter of beads satisfies the above range, it is possible to further enhance the dispersibility of the nanocellulose. If the diameter of beads exceeds the above range, the average particle size and particle size deviation of the nanocellulose may increase, which may lower the dispersibility.

In addition, it is preferable from the viewpoint of transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more are preferred, but they are not limited thereto.

In addition, the ultrasonic pretreatment is a method of physically crushing or pulverizing nanoparticles with waves generated by emitting ultrasound of 20 kHz into a solution.

The ultrasonic pretreatment may be carried out for less than 30 minutes with an energy dose of 30,000 J or less. For example, the ultrasonic pretreatment may be carried out for 25 minutes or less, 20 minutes or less, or 18 minutes or less with an energy dose of 25,000 J or less or 22,000 J or less. As the energy dose and the operation time satisfy the above ranges, the effect of the pretreatment with ultrasound, that is, the enhancement in dispersibility can be maximized. If the energy dose exceeds the above range, the nanoparticles may be re-agglomerated, thereby deteriorating the dispersibility.

The nanocellulose according to an embodiment may be pretreated with a bead mill or pretreated with ultrasound. Alternatively, the nanocellulose according to an embodiment may be pretreated with both a bead mill and ultrasound. In such an event, it is preferable that ultrasonic pretreatment is carried out after the bead mill pretreatment to prevent reagglomeration, thereby enhancing the dispersibility.

The biodegradable polyester resin according to an embodiment has a polydispersity index (PDI) of less than 2.0. For example, the polydispersity index of the biodegradable polyester resin may be less than 2.0, 1.95 or less, or 1.9 or less.

As the polydispersity index is adjusted to the above range, the thermal resistance can be further enhanced. Specifically, if the polydispersity index exceeds the above range, the thermal resistance of the biodegradable polyester resin may be deteriorated. Thus, in the process of preparing a molded article such as a film using the biodegradable polyester resin, the rate of degradation of the polymer may be increased, thereby reducing the processability and productivity.

The polydispersity index may be calculated according to the following Equation A.

[Equation A]

$$\text{Polydispersity (PDI)} = \frac{Mw}{Mn}$$

In Equation A, Mw is the weight average molecular weight (g/mole) of a resin, and Mn is the number average molecular weight (g/mole) of the resin.

In addition, the content of the nanocellulose may be, for example, 3,000 ppm or less, for example, 2,500 ppm or less, for example, 2,000 ppm or less, 1,800 ppm or less, 1,500 ppm or less, 1,000 ppm or less, 900 ppm or less, 800 ppm or less, 700 ppm or less, 600 ppm or less, 500 ppm or less, or 400 ppm or less, and may be, for example, 100 ppm or more, 150 ppm or more, 200 ppm or more, 250 ppm or more, 300 ppm or more, 400 ppm or more, 500 ppm or more, 600 ppm or more, 800 ppm or more, or 1,000ppm or more, based on total weight of the diol, aromatic dicarboxylic acid, and aliphatic dicarboxylic acid. As the content of the nanocellulose satisfies the above range, the biodegradability and physical properties such as strength can be further enhanced.

A titanium-based catalyst or a germanium-based catalyst may be further added to the slurry before the esterification reaction in the second step.

Specifically, in the case where the esterification reaction is carried out once, a titanium-based catalyst or a germanium-based catalyst may be further added to the slurry.

In addition, in the case where the esterification reaction is carried out two or more times, a titanium-based catalyst or a germanium-based catalyst may be further added to the slurry, the reaction product obtained by the first esterification of the slurry, or both.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diol, aromatic dicarboxylic acid, and aliphatic dicarboxylic acid. For example, the titanium-based catalyst or germanium-based

catalyst may be employed in an amount of 100 ppm to 800 ppm, 150 ppm to 700 ppm, 200 ppm to 600 ppm, or 250 ppm to 550 ppm. As the content of the catalyst satisfies the above range, the processability can be further enhanced.

A phosphorus-based stabilizer may be further added during the esterification reaction in the second step, at the end of the esterification reaction, or both.

Specifically, in the case where the esterification reaction is carried out once, a phosphorus-based stabilizer may be further added during the esterification reaction, at the end of the esterification reaction, or both.

In addition, in the case where the esterification reaction is carried out two or more times, a phosphorus-based stabilizer may be further added during the first esterification reaction, during the second esterification reaction, or both, or at the end of the first esterification reaction and at the end of the second esterification reaction.

Specifically, the biodegradable polyester resin may further comprise at least one phosphorus-based stabilizer selected from the group consisting of amine-based hightemperature thermal stabilizers such as tetraethylenepentaamine, phosphoric acid, phosphorous acid, polyphosphoric acid, trimethylphosphate, triethylphosphate, triethylphosphonoacetate, trimethylphosphine, and triphenylphosphine.

The content of the phosphorus-based stabilizer may be 3,000 ppm or less based on the total weight of the diol, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diol, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

At least one selected from the group consisting of an additive such as silica, potassium, titanium dioxide, and magnesium and a color-correcting agent such as cobalt acetate may be further added at the end of the esterification reaction of the second step. That is, the additive and/or color-correcting agent may be added after the completion of the esterification reaction and then stabilized, and the polycondensation reaction may then be carried out.

Referring back to Fig. 1, the process for preparing a biodegradable polyester resin (S100) comprises a third step (S130) of subjecting the prepolymer to a polycondensation reaction.

The polycondensation reaction may be carried out at 180°C to 280°C and 1.0 Torr or less for 1 hour to 5 hours. For example, the polycondensation reaction may be carried out at 190°C to 270°C, 210°C to 260°C, or 230°C to 255°C, at 0.9 Torr or less, 0.7 Torr or less, 0.2 Torr to 1.0 Torr, 0.3 Torr to 0.9 Torr, or 0.4 Torr to 0.6 Torr, for 1.5 hours to 5 hours, 2 hours to 5 hours, or 2.5 hours to 4.5 hours.

In addition, a titanium-based catalyst or a germanium-based catalyst may be further added to the prepolymer before the polycondensation reaction. In addition, one or more selected from the group consisting of an additive such as silica, potassium, titanium dioxide, and magnesium; a stabilizer such as trimethyl phosphate, triphenyl phosphate, trimethyl phosphine, phosphoric acid, phosphorous acid, and an amine-based stabilizer such as tetraethylenepentaamine; and a polymerization catalyst such as antimony trioxide, antimony trioxide, and tetrabutyl titanate may be further added to the prepolymer before the polycondensation reaction.

Meanwhile, the bio-derived softener may be added during the polycondensation reaction.

According to an embodiment of the present invention, the bio-derived softener may be added during the esterification reaction, rather than during the polycondensation reaction, to induce stable plasticization. For example, if the bio-derived softener is added during the polycondensation reaction, since the polycondensation reaction is carried out under a high vacuum, the bio-derived softener is easily sucked into the pipe on the vacuum side, so that a stable plasticization effect cannot be achieved, and flexibility cannot be achieved relative to the amount added. In addition, it may rather delay the reaction, making it difficult to obtain a high viscosity molecular weight. If the bio-derived softener is excessively added to solve this, the viscosity may be lowered. In such a case, it may be difficult to form a bubble during blow molding.

The polymer may have a number average molecular weight of greater than 30,000 g/mole. For example, the number average molecular weight of the polymer may be 40,000 g/mole or more, 41,000 g/mole or more, 42,000 g/mole or more, or 43,000 g/mole or more. As the number average molecular weight of the polymer satisfies the above range, the physical properties and processability can be further enhanced.

Thereafter, pellets may be prepared from the polymer.

Specifically, the polymer may be cooled to 15°C or lower, 10°C or lower, or 6°C or lower, and the cooled polymer may then be cut to prepare pellets.

The cutting step may be carried out using a pellet cutter without limitations as long as it is commonly used in the art, and the pellets may have various shapes. Examples of the pellet cutting method may include an underwater cutting method or a strand cutting method.

## Biodegradable polyester sheet

Meanwhile, in an embodiment of the present invention, a biodegradable polyester sheet may be prepared using

the biodegradable polyester resin.

For example, the biodegradable polyester sheet may be prepared using the biodegradable polyester resin or polyester resin pellets.

Specifically, the polyester resin prepared above is put in, for example, a stainless steel (SUS) mold and maintained at about 150 to 300°C under a pressure of 5 to 20 MPa for 1 minute to 30 minutes using a hot press. It is then taken out and immediately cooled at 18°C to 25°C in water for about 10 seconds to 5 minutes to obtain a biodegradable polyester sheet.

The physical properties such as tensile strength, Young's modulus, and elongation at break of the biodegradable polyester sheet may satisfy the ranges described above concerning the biodegradable polyester resin.

## Biodegradable polyester film

In an embodiment of the present invention, there is provided a biodegradable polyester film, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue; and a bio-derived softener.

The biodegradable polyester film may have a thickness of 5 μm to 200 μm. For example, the thickness of the biodegradable polyester film may be 5 μm to 180 μm, 5 μm to 160 μm, 10 μm to 150 μm, 15 μm to 130 μm, 20 μm to 100 μm, 25 μm to 80 μm, or 25 μm to 60 μm.

The physical properties such as forming depth, pinhole resistance, and thermal shrinkage rate of the biodegradable polyester film may satisfy the ranges described above concerning the biodegradable polyester resin.

The biodegradable polyester film may be prepared using the biodegradable polyester resin or polyester resin pellets.

Specifically, the process for preparing a biodegradable polyester film may comprise a first step of mixing a diol component and an aromatic dicarboxylic acid to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; a third step of subjecting the prepolymer to a polycondensation reaction to prepare a polymer; a fourth step of preparing pellets from the polymer; and a fifth step of drying and melt-extruding the pellets, wherein a bio-derived softener may be added during the esterification reaction, during the polycondensation reaction, or both.

Details on the first step to the fourth step are as described above.

In the fifth step, the drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of the pellets satisfy the above ranges, it is possible to further enhance the quality of the biodegradable polyester film or molded article thus produced.

Upon completion of the drying, the moisture content may be 500 ppm or less, 400 ppm or less, 350 ppm or less, or 300 ppm or less.

In the fifth step, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, or 150°C to 240°C. The melt-extrusion may be carried out by a blown film process.

According to an embodiment of the present invention, as the biodegradable polyester film satisfies the specific configuration and the specific ranges of physical properties of the biodegradable polyester resin, it is possible to achieve excellent physical properties and biodegradability even if inorganic substances and other additives are added in an amount less than that commonly used in the production of the biodegradable polyester film.

For example, when the biodegradable polyester film is prepared, the inorganic substances may be added in a less amount than that commonly used, for example, about 20% by weight, to achieve equivalent or better physical properties.

## Biodegradable polyester molded article

In an embodiment of the present invention, a biodegradable polyester molded article may be prepared from the biodegradable polyester resin.

Specifically, the molded article may be prepared by molding the biodegradable polyester resin by a method known in the art such as extrusion or injection, and the molded article may be an injection molded article, an extrusion molded article, a thin film molded article, or a blow molded article, but it is not limited thereto.

For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes, or in the form of a container that can be

used as a container for food packaging such as lunch boxes. In addition, the molded article may be a molded article of various types such as disposable straws, spoons, food plates, and forks.

In particular, the molded article may be formed from the biodegradable polyester resin in which the tensile strength, Young's modulus, $F_{100}$, forming depth, pinhole resistance, and elongation at break are adjusted, wherein it is possible to maximize flexibility while maintaining an appropriate level of tensile strength. It can be expanded to a variety of applications such as packaging materials, garbage bags, mulching films, and disposable products that require excellent durability and elongation at break, as well as lap films, industrial stretch films, molding films, lamination of architectural interiors, and applications requiring three-dimensional molding such as 3D molding that requires high flexibility. When it is applied to these applications, excellent properties can be exerted.

## Embodiments for Carrying Out the Invention

Hereinafter, the present invention will be described in detail with reference to examples. The following examples are only illustrative of the present invention, and the scope of the present invention is not limited thereto.

## <Example>

### Example 1

### Preparation of a biodegradable polyester resin

#### Step 1: Obtaining a slurry

1,4-Butanediol (1,4-BDO) and terephthalic acid (TPA) were mixed at a molar ratio (1,4-BDO 50% by mole:TPA 50% by mole) of 1:1, which was then charged to a slurry tank (provided with an anchor type at the bottom, a height to the agitator of 30 mm, and three rotor blades) in a state without a catalyst. Here, terephthalic acid (TPA) had a D50 of 200 μm and a standard deviation (SD) of the D50 of 20.

Then, the mixture was agitated at 70°C and 150 rpm for 30 minutes, thereby obtaining a slurry without phase separation.

#### Step 2: Preparation of a prepolymer

The slurry obtained in step 1 was fed to a reactor through a supply line, and 300 ppm of tetrabutyl titanate (Tyzor TnBT, Dupont) as a titanium-based catalyst was added thereto. A first esterification reaction was then carried out at 210°C and atmospheric pressure for about 1.5 hours. When 95% of water as a by-product was discharged, 300 ppm of squalane (Sigma-Aldrich) as a bio-derived softener was added to the reaction product based on the total weight of the diol, aromatic dicarboxylic acid, and aliphatic dicarboxylic acid (at the time of ES step 1) to obtain a plasticized oligomer.

Added to the plasticized oligomer were 50% by mole of 1,4-butanediol (1,4-BDO) based on the total number of moles of the diol components, 50% by mole of adipic acid (AA) based on the total number of moles of the dicarboxylic acids, 200 ppm of tetrabutyl titanate (Tyzor TnBT, Dupont) as a titanium-based catalyst and 100 ppm of triethyl phosphate as a stabilizer, based on the total weight of the diol, aromatic dicarboxylic acid, and aliphatic dicarboxylic acid. A second esterification reaction (ES step 2) was then carried out at 210°C and atmospheric pressure for about 1.5 hours until 95% of water as a by-product was discharged, thereby obtaining a prepolymer having a number average molecular weight of 1,500 g/mole.

#### Step 3: Polycondensation reaction

100 ppm of triethyl phosphate as a stabilizer based on the total weight of the diol, aromatic dicarboxylic acid, and aliphatic dicarboxylic acid was further added to the prepolymer obtained in step 2, which was continuously transferred to a pre-polycondensation step and subjected to a reaction while heated to 240°C and a low vacuum of atmospheric pressure to 100 Torr for 1 hour (PC pre-polycondensation step). Thereafter, it was transferred to a final polycondensation step and subjected to a polycondensation reaction for about 4 hours under about 0.5 Torr in a disc ring type reactor (PC polycondensation step). Thereafter, a polymer having a number average molecular weight of about 45,000 g/mole was prepared by increasing the molecular weight to a high viscosity for about 3 hours while removing the residual 1,4-butanediol and by-products. It was cooled to 5°C and cut with a pellet cutter to obtain biodegradable polyester resin pellets.

**Preparation of a biodegradable polyester sheet**

Two Teflon sheets were prepared. A stainless steel (SUS) frame (with an area of 12 cm × 12 cm) was placed on one Teflon sheet, and about 7 g of the polyester resin pellets prepared above was put in the stainless steel (SUS) frame (with an area of 12 cm × 12 cm), which was covered with another Teflon sheet. It was placed in the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

**Preparation of a biodegradable polyester film**

The biodegradable polyester resin pellets were dried at 80°C for 5 hours and then melt-extruded at 160°C using a blown film extruder (Blown Film Extrusion Line, manufacturer: Eugene Engineering) to prepare a biodegradable polyester film having a thickness of 50 μm.

**Example 2**

A biodegradable polyester resin, a biodegradable polyester sheet, and a biodegradable polyester film were prepared in the same manner as in Example 1, except that the amounts of 1,4-butanediol (1,4-BDO), terephthalic acid (TPA), and adipic acid (AA) were changed and that the content of squalane contained in the biodegradable polyester resin was changed, as shown in Table 1 below.

**Example 3**

A biodegradable polyester resin, a biodegradable polyester sheet, and a biodegradable polyester film were prepared in the same manner as in Example 1, except that squalane was added during ES step 2 of step 2, as shown in Table 1 below.

**Example 4**

A biodegradable polyester resin, a biodegradable polyester sheet, and a biodegradable polyester film were each prepared in the same manner as in Example 2, except that squalane was added during the PC pre-polycondensation step in the low vacuum state of step 3, and its amount added was changed, as shown in Table 1 below.

**Example 5**

A biodegradable polyester resin, a biodegradable polyester sheet, and a biodegradable polyester film were each prepared in the same manner as in Example 1, except that step 1 was not carried out, 100% by mole of 1,4-butanediol (1,4-BDO), 52% by mole of terephthalic acid (TPA), and 48% by mole of adipic acid (AA) were added all at once in step 2, and 300 ppm of tetrabutyl titanate (Tyzor TnBT, Dupont) as a titanium-based catalyst was added based on the total weight of the diol, aromatic dicarboxylic acid, and aliphatic dicarboxylic acid; and the esterification reaction was carried out at 230°C and atmospheric pressure for about 3 hours until 95% of water as a by-product was discharged and the esterification reaction was almost completed at which time 2,000 ppm of squalane (SigmaAldrich) as a bio-based softener was added to obtain a plasticized prepolymer (hereinafter, referred to as ES step).

**Comparative Example 1**

A biodegradable polyester resin, a biodegradable polyester sheet, and a biodegradable polyester film were prepared in the same manner as in Example 1, except that polytetramethylene ether glycol (PTMEG) was used instead of squalane, a bio-derived softener, and its content was changed, as shown in Table 1 below.

**Comparative Example 2**

A biodegradable polyester resin, a biodegradable polyester sheet, and a biodegradable polyester film were prepared in the same manner as in Example 5, except that PBS obtained by reacting 1,4-butanediol (1,4-BDO) and succinic acid (SA) was used; and that squalane was added in the polycondensation step (PS polycondensation step), as shown in Table 1 below.

[Table 1]

| | | Ex. 1 | Ex. 2 | Ex. 3 | Ex. 4 | Ex. 5 | C. Ex. 1 | C. Ex. 2 |
|---|---|---|---|---|---|---|---|---|
| Resin | Resin type | PBAT | PBAT | PBAT | PBAT | PBAT | PBAT | PBS |
| | 1,4-BDO (% by mole) | 50/50 | 52/48 | 50/50 | 52/48 | 100 | 50/50 | 100 |
| | TPA/AA (% by mole) | 50/50 | 52/48 | 50/50 | 52/48 | 50/50 | 50/50 | SA 100 |
| | Number of first repeat unit (X) | 207 | 214 | 207 | 214 | 145 | 145 | - |
| | Number of second repeat unit (Y) | 207 | 197 | 207 | 197 | 145 | 145 | 205 |
| | Content of softener in the resin (ppm) | 10.5 | 35 | 210 | 210 | 1,400 | 150 | 210 |
| | Mn (g/mole) | 43,000 | 43,000 | 43,000 | 43,000 | 30,000 | 30,000 | 30,000 |
| Process | Softener type | Squalane | Squalane | Squalane | Squalane | Squalane | PTMEG | Squalane |
| | Amount of softener used (ppm) | 15 | 50 | 300 | 300 | 2,000 | 300 | 300 |
| | Step of addition | ES step 1 | ES step 1 | ES step 2 | PC prepolycondensation step | ES step | ES step 1 | PC polycondensation step |

## Evaluation Example

### Evaluation Example 1: Analysis of the content of a softener

1.0 g of each biodegradable polyester resin obtained in the Examples and Comparative Examples was weighed and dissolved in chloroform, which was measured using TD (thermal desorption) GC/MS for a peak area of the softener compound. The residual amount (content) of the softener in the biodegradable polyester resin was then calculated from the standard graph of the softener.

1. TD: JAI 505 III

- Thermal desorption temperature: 120°C
- Thermal desorption time: 30 minutes
- Cold trap temperature: -40°C
- SAT desorption temperature: 280°C
- SAT desorption time: 3 minutes
- Desorption flow: 50 ml/minute
- Needle temperature: 280°C
- Transfer line temperature: 280°C
- Split ratio: 50:1

2. GC: Agilent 7890B

- Column: HP 5, 350°C, 30 m × 0.25 mm × 0.25 μm
- Column flow rate: 1.2 ml/minute
- 50°C (5 minutes), 10/minute 150°C (1 minute), 10/minute 280°C (12 minutes)

3. MS: Agilent 5977A

- Ion source temperature: 230°C
- Interface temperature: 280°C
- Captured at 120°C for 30 minutes

### Evaluation Example 2: Tensile strength (TS), $F_{100}$, Young's module (YM100), and elongation at break (Eb)

The biodegradable polyester sheets prepared in the Examples or Comparative Examples were each cut to prepare a specimen in accordance with ASTM D638 V-type. It was then measured using INSTRON's universal testing machine (UTM, model name 4206-001) at a tensile speed of 100 mm/minute and calculated by the program built in the equipment for the tensile strength (kgf/mm$^2$ = 9.8 MPa), $F_{100}$ (kgf/mm$^2$ = 9.8 MPa), Young's module (YM100), and elongation at break (%).

### Evaluation Example 3: Forming depth ($FD_{80}$)

Each biodegradable polyester film having a width of 5 cm, a length of 5 cm, and a thickness of 50 μm prepared in the Examples and Comparative Examples was subjected to thermal pressing with a thermoforming press (Youngjin Eng) at 80°C for 30 seconds, and the forming depth (cm) of the forming process was measured.

Referring to Figs. 2a and 2b, the thermoforming press (1) comprises a lower plate (10) and an upper plate (20), wherein the lower plate (10) comprises cavities (11 to 15) with sequentially varying depths (Dsi to Dss) of 1 cm, 3 cm, 5 cm, 7 cm, and 10 cm, and the upper plate (20) comprises protrusions (21 to 25) with sequentially varying lengths (Dsi to $Ds_5$ ) of 1 cm, 3 cm, 5 cm, 7 cm, and 10 cm, corresponding to the cavities (11 to 15) of the lower plate (10).

Here, since the cavities (11 to 15) of the lower plate (10) have a mold and a heat source is equipped in the mold, the polyester film (50) may be molded in conformity to the mold when the polyester film (50) is placed between the lower plate (10) and the upper plate (20) and thermally pressed by the press.

In addition, referring to Fig. 3, in light of the thickness of the polyester film (50), the cavities of the lower plate are designed such that its base is a square with a length ($d_s$) on one side of about 10.3 mm and/or a circle with a diameter ($d_c$) of about 10.3 mm.

Since the upper plate (20) has a shape of 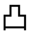, and the lower plate (10) has a shape of 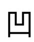 in the thermoforming

press (1), the polyester film (50) was placed between the lower plate (10) and the upper plate (20) and thermally pressed at about 80°C for about 30 seconds. Then, the forming depth ($FD_{80}$), which is the depth (cm) to which the polyester film (50) had been molded without tearing or breakage, was measured.

**Evaluation Example 4: Number of pinholes (PR)**

Each biodegradable polyester film having a width of 15 cm, a length of 200 cm, and a thickness of 50 μm prepared from the biodegradable polyester resins in the Examples and Comparative Examples was subjected to rotation and reciprocation 1,300 times at a rotation angle of 420° for 30 minutes at room temperature using a Gelbo Flex, the film was then flatly placed on a blank paper, an oily ink was applied on the film using a doctor blade, and the film was removed. The number of ink dots appearing on the blank paper, which indicates the number of pinholes, was counted. Each sample was measured 3 times to obtain an average value.
The specific conditions were as follows.

Instrument name: IDM Instruments, Gelbo Flex Tester, Model: G0002
Cycles per minute: 45 cycles/minute
Sample length: 200 mm
90 mm: twist, 65 mm: straight
Pinhole count: 150 mm × 150 mm

**Evaluation Example 5: Melt index (MI)**

Each biodegradable polyester resin was measured for a melt index (g/10 minute) at a temperature of 190°C and a load of 2.16 kg according to ASTM D1238.
The specific conditions were as follows.

Device name: Melt Flow Index (WL 1400, WithLab)
Measurement range: 40 to 300°C, precision: ±1°C

**Evaluation Example 6: Thermal shrinkage rate ($S_{80}$)**

The biodegradable polyester films prepared in the Examples and Comparative Examples were each cut into 150 mm in length and 2 cm in width regardless of the direction to prepare a specimen. The initial length thereof at room temperature and the length of the biodegradable polyester film specimen after it had been left for 5 minutes in a hot air oven at 80°C were measured to calculate a thermal shrinkage rate ($S_{80}$) according to the following Equation 4.

[Equation 4]

$$\text{Thermal shrinkage rate } (S_{80}) = \frac{L_{25} - L_{80}}{L_{25}} \times 100\ (\%)$$

In Equation 4, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

**Evaluation Example 7: Post-workability (PW)**

The values of the number of pinholes (PR) and the forming depth ($FD_{80}$) measured in Evaluation Examples 3 and 4 above were used to calculate the post-workability (PW) represented by the following Equation 1:

[Equation 1]

$$\text{Post-workability (PW, \%)} = \frac{FD_{80}}{PR} \times 100\ (\%)$$

In Equation 1, $FD_{80}$ is the forming depth (cm), excluding the unit, measured by subjecting a biodegradable polyester film having a width of 5 cm, a length of 5 cm, and a thickness of 50 $\mu$m prepared from the biodegradable polyester resin to thermal pressing with a thermoforming press at 80°C for 30 seconds, and

PR is the number of pinholes, excluding the unit, measured by subjecting a biodegradable polyester film having a width of 15 cm, a length of 200 mm, and a thickness of 50 $\mu$m prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

**Evaluation Example 8: Ductility rate**

The values of the tensile strength (TS) and the number of pinholes (PR) measured in Evaluation Examples 2 and 3 above were used to calculate the ductility rate represented by the following Equation 2:

[Equation 2]

$$\text{Ductility rate} = \frac{PR}{TS} \times 100\ (\%)$$

TS is the tensile strength (kgf/mm$^2$), excluding the unit, measured by cutting a biodegradable polyester sheet prepared from the biodegradable polyester resin to prepare a specimen according to ASTM D638 V-type and testing the specimen at a tensile speed of 100 mm/minute using a universal test machine (UTM).

PR is the number of pinholes, excluding the unit, measured by subjecting a biodegradable polyester film having a width of 15 cm, a length of 200 mm, and a thickness of 50 $\mu$m prepared from the biodegradable polyester resin to rotation and reciprocation 1,300 times at a rotation angle of 420° for 30 minutes at room temperature using a Gelbo Flex, placing the film on a blank paper, applying an oily ink on the film using a doctor blade, removing the film, and counting the number of ink dots appearing on the blank paper, which indicates the number of pinholes.

**Evaluation Example 9: Thermal resistance ductility index (TRDI)**

The values of the elongation at break (Eb) and the thermal shrinkage rate ($S_{80}$) measured in Evaluation Examples 2 and 6 above were used to calculate the thermal resistance ductility index (TRDI) represented by the following Equation 3:

[Equation 3]

$$\text{TRDI} = \frac{Eb\ (\%) - S_{80}\ (\%)}{100\ (\%)}$$

In Equation 3, Eb refers to the elongation at break measured by cutting a biodegradable polyester sheet prepared from the biodegradable polyester resin to prepare a specimen in accordance with ASTM D638 V-type and testing the specimen at a tensile speed of 100 mm/minute using a universal test machine (UTM), and $S_{80}$ refers to the thermal shrinkage rate ($S_{80}$) represented by the above Equation 4.

**Evaluation Example 10: Surface migration**

Each biodegradable polyester sheet obtained in the Examples and Comparative Examples was stored in a hot air oven at 80°C for 12 hours. Whether or not the softener had migrated onto the surface was visually observed and evaluated as follows.

◦: The softener was observed on the surface of the sheet
×: The softener was not observed on the surface of the sheet

**Evaluation Example 11: Blow moldability**

The blow moldability was evaluated at a temperature of 160°C in a blow molding machine by blowing air from the bottom and observing bubble formation and detachment of the surfaces of the film during winding, as follows:

o: A bubble was in a good shape while it was neither stretched to one side to be oblique nor burst, and the surfaces thereof were not stuck to each other during winding
△: A bubble was shaped to some extent, it was neither stretched to one side to be oblique nor burst, or the surfaces thereof were slightly stuck to each other but readily detached during winding
×: A bubble was not properly shaped, was stretched to one side to be oblique or burst, or the surfaces thereof were stuck to each other so as not to be detached during winding

[Table 2]

| | | Ex. 1 | Ex. 2 | Ex. 3 | Ex. 4 | Ex. 5 | C. Ex. 1 | C. Ex. 2 |
|---|---|---|---|---|---|---|---|---|
| Physical properties | Tensile strength (TS) (MPa) | 37 | 36 | 34 | 35 | 30 | 28 | 38 |
| | Young's modulus (YM100) (kgf/mm$^2$) | 9.9 | 8.2 | 6.7 | 8.5 | 3.5 | 10.1 | 11.1 |
| | $F_{100}$(kgf/mm$^2$) | 1.1 | 1.05 | 0.79 | 0.99 | 0.42 | 1.35 | 1.75 |
| | Elongation at break (Eb) (%) | 500 | 595 | 670 | 605 | 870 | 490 | 415 |
| | Forming depth (FDso) (cm) | 5.1 | 5.6 | 6.4 | 5.9 | 8 | 3.8 | 1.5 |
| | Thermal shrinkage rate (Sso) (%) [Eq. 4] | 32 | 34 | 45 | 42 | 49 | 53 | 35 |
| | Number of pinholes (PR) | 14 | 10 | 6 | 10 | 3 | 29 | 38 |
| | Melt index (MI) (g/10 min.) | 4.5 | 4.6 | 5.5 | 5.1 | 9 | 9.5 | 8.5 |
| | Post-workability (PW, %) [Eq. 1] | 33 | 56 | 107 | 59 | 267 | 13 | 4 |
| | Ductility rate (%) [Eq. 2] | 37.84 | 27.78 | 17.65 | 28.57 | 10.00 | 82.86 | 82.86 |
| | Thermal resistance ductility index (TRDI) [Eq. 3] | 4.68 | 5.61 | 6.25 | 5.63 | 8.21 | 4.37 | 3.80 |
| | Surface migration | X | X | X | X | X | O | O |
| | Blow moldability | O | O | O | O | O | X | X |

[Equation 1] $\text{Post-workability (PW, \%)} = \frac{FD_{80}}{PR} \times 100\ (\%)$

[Equation 2] $\text{Ductility rate} = \frac{PR}{TS} \times 100\ (\%)$

[Equation 3] $\text{Thermal resistance ductility index (TRDI)} = \frac{Eb\ (\%) - S_{80}\ (\%)}{100\ (\%)}$

[Equation 4] $\text{Thermal shrinkage rate } (S_{80}) = \frac{L_{25} - L_{80}}{L_{25}} \times 100\ (\%)$

As can be seen from Table 2 above, the polyester resins of Examples 1 to 5, comprising a first repeat unit comprising a first diol residue and an aromatic dicarboxylic acid residue and a second repeat unit comprising a second diol residue and an aliphatic dicarboxylic acid residue; and squalane as a bio-derived softener, had high flexibility while maintaining excellent strength and thermal resistance, along with excellent formability, processability, and productivity, as compared with Comparative Examples 1 and 2.

Specifically, when the biodegradable polyester resins of Examples 1 to 5 comprising squalane as a bio-derived softener were each used, the Young's modulus, $F_{100}$, and elongation at break were very excellent, while the tensile strength of the sheet was maintained at 30 to 40 MPa, the number of pinholes was 14 or less, and the forming depth was 5.1 to 8. Thus, it had excellent flexibility while maintaining an appropriate level of strength and had excellent blow moldability.

In contrast, when the polyester resin of Comparative Example 1 comprising polytetramethylene ether glycol (PTMEG), which is not a bio-derived softener, was used, the physical properties were significantly deteriorated, the softener migrated onto the surface of the biodegradable polyester sheet, and the blow moldability was also deteriorated.

Meanwhile, when the polyester resin of Comparative Example 2, composed of a single repeat unit, was used, although it comprised squalane as a bio-derived softener, the tensile strength was similar, whereas the flexibility was significantly reduced, and the blow moldability was deteriorated.

In addition, it was confirmed that the physical properties vary depending on the content of squalane in the biodegradable polyester resin.

For example, in Examples 2 and 3, in which the content of squalane in the biodegradable polyester resin was 35 ppm and 210 ppm, respectively, the tensile strength of the biodegradation polyester sheet or film was similar, while the Young's modulus, $F_{100}$, and the number of pinholes were reduced, and the forming depth and elongation at break were improved, resulting in enhanced flexibility, as compared with Example 1 in which the content of squalane in the biodegradable polyester resin was 10.5 ppm. As a result, it was possible to implement such composite physical properties as ductility rate, thermal resistance ductility index (TRDI), and post-workability (PW) at an optimal level. In contrast, when the content of squalane in the polyester resin is too high at 1,400 ppm as in Example 5, the flexibility increased whereas the tensile strength decreased, and the thermal shrinkage rate increased too much, indicating that the strength and thermal resistance were deteriorated.

Meanwhile, it was confirmed that the process conditions of a biodegradable polyester resin had an impact on the physical properties of the biodegradable polyester resin or film.

Specifically, even if the same content of squalane is employed, the physical properties may vary depending on the timing of adding squalane.

For example, when the physical properties of the polyester sheets or films of Examples 3 and 4 are compared, in the case where it was added during the esterification reaction (ES) as a pre-polymerization step, the Young's modulus, $F_{100}$, the number of pinholes overall decreased, and the forming depth and elongation at break increased, resulting in a significant increase in flexibility, as compared with the case where it was added during the polycondensation reaction. In addition, such composite physical properties as post-workability (PW), ductility rate, and thermal resistance ductility index (TRDI) were overall improved.

Accordingly, the addition of squalane during the esterification reaction, although its content is the same, can induce stable plasticization, whereby it is possible to further enhance the elongation at break, pinhole resistance, and forming depth of a biodegradable polyester sheet, film, or molded article prepared from the biodegradable polyester resin, thereby achieving high flexibility.

[Explanation of Reference Numerals]

1: thermoforming press
10: lower plate
20: upper plate
50: biodegradable polyester film
11 to 15: cavities of the lower plate
21 to 25: protrusions of the upper plate
$Ds_1$ to Dss: forming depth of the cavities of the lower plate or the length of the protrusions of the upper plate
$Ds_{1:}$ forming depth of the cavities of the lower plate (bottom: square)
Dei: forming depth of the cavities of the lower plate (bottom: circle)
$d_{su}$: diameter of the protrusions of the upper plate
$d_{sd}$: diameter of the cavities of the upper plate
$d_s$: length on one side (square)

$d_c$: diameter of circle

## Claims

1. A biodegradable polyester resin, which comprises a first repeat unit comprising a first diol residue and an aromatic dicarboxylic acid residue, and a second repeat unit comprising a second diol residue and an aliphatic dicarboxylic acid residue; and a bio-derived softener.

2. The biodegradable polyester resin of claim 1, wherein the bio-derived softener comprises a saturated linear or branched hydrocarbon, an unsaturated linear or branched hydrocarbon, or a combination thereof, and it is employed in the biodegradable polyester resin in an amount of 10 ppm or more by weight.

3. The biodegradable polyester resin of claim 2, wherein the bio-derived softener comprises a repeat unit represented by the following Formula 1, a repeat unit represented by the following Formula 2, or a combination thereof:

[Formula 1]

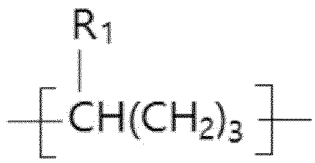

[Formula 2]

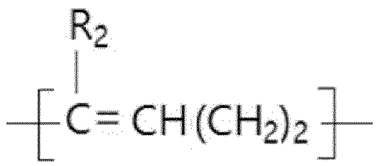

in Formulae 1 and 2, Ri and $R_2$ are each independently an alkyl group of $C_1$ to $C_4$.

4. The biodegradable polyester resin of claim 1, wherein the bio-derived softener has a viscosity of 5 cP to 80 cP at a temperature of 20°C, a molar mass of 250 g/mole to 1,000 g/mole, and a refractive index of 0.8 to 2.5.

5. The biodegradable polyester resin of claim 1, wherein the post-workability (PW) represented by the following Equation 1 is 20% or more:

[Equation 1]

$$\text{Post-workability (PW, \%)} = \frac{FD_{80}}{PR} \times 100\ (\%)$$

in Equation 1, $FD_{80}$ is the forming depth (cm), excluding the unit, measured by subjecting a biodegradable polyester film having a width of 5 cm, a length of 5 cm, and a thickness of 50 μm prepared from the biodegradable polyester resin to thermal pressing with a thermoforming press at 80°C for 30 seconds, and
PR is the number of pinholes, excluding the unit, measured by subjecting a biodegradable polyester film having a width of 15 cm, a length of 200 mm, and a thickness of 50 μm prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

6. The biodegradable polyester resin of claim 1, wherein the biodegradable polyester resin has a ductility rate of 80% or less as represented by the following Equation 2:

[Equation 2]

$$\text{Ductility rate} = \frac{PR}{TS} \times 100\ (\%)$$

in Equation 2, TS is the tensile strength ($kgf/mm^2$), excluding the unit, measured by cutting a biodegradable polyester sheet prepared from the biodegradable polyester resin to prepare a specimen according to ASTM D638 V-type and testing the specimen at a tensile speed of 100 mm/minute using a universal test machine (UTM), and
PR is the number of pinholes, excluding the unit, measured by subjecting a biodegradable polyester film having a width of 15 cm, a length of 200 mm, and a thickness of 50 $\mu$m prepared from the biodegradable polyester resin to rotation and reciprocation 1,300 times at a rotation angle of 420° for 30 minutes at room temperature using a Gelbo Flex, flatly placing the film on a blank paper, applying an oily ink on the film using a doctor blade, removing the film, and counting the number of ink dots appearing on the blank paper, which indicates the number of pinholes.

7. The biodegradable polyester resin of claim 1, wherein the thermal resistance ductility index (TRDI) is 4.5 or more as represented by Equation 3:

[Equation 3]

$$\text{Thermal resistance ductility index (TRDI)} = \frac{Eb\ (\%) - S_{80}\ (\%)}{100\ (\%)}$$

in Equation 3, Eb refers to the elongation at break (%) measured by cutting a biodegradable polyester sheet prepared from the biodegradable polyester resin to prepare a specimen in accordance with ASTM D638 V-type and testing the specimen at a tensile speed of 100 mm/minute using a universal test machine (UTM), and
$S_{80}$ refers to the thermal shrinkage rate ($S_{80}$) represented by Equation 4,

[Equation 4]

$$\text{Thermal shrinkage rate } (S_{80}) = \frac{L_{25} - L_{80}}{L_{25}} \times 100\ (\%)$$

in Equation 4, $L_{25}$ is the initial length of a biodegradable polyester film specimen at 25°C prepared from the biodegradable polyester resin, and $L_{80}$ is the length of the biodegradable polyester film specimen prepared from the biodegradable polyester resin after it has been left for 5 minutes in a hot air oven at 80°C.

8. The biodegradable polyester resin of claim 1, wherein the biodegradable polyester resin satisfies at least one characteristic selected from the following:

a tensile strength of 25 MPa or more,
a Young's modulus (YM100) of 0.1 $kgf/mm^2$ to 10.0 $kgf/mm^2$,
an $F_{100}$ of 0.01 $kgf/mm^2$ to 1.3 $kgf/mm^2$,
an elongation at break (Eb) of 500% or more,
a forming depth ($FD_{80}$) of 4 cm or more,
a number of pinholes of 25 or less,
a thermal shrinkage rate ($S_{80}$) of 50% or less, and
a melt index (MI) of 10 g/10 minute or less.

9. The biodegradable polyester resin of claim 1, wherein the first and second diol residues each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, the aliphatic dicarboxylic

acid residue comprises a residue of adipic acid, succinic acid, sebacic acid, or a derivative thereof, the number of the first repeat unit (X) is 100 to 500, and the number of the second repeat unit (Y) is 100 to 500.

**10.** The biodegradable polyester resin of claim 1, wherein the biodegradable polyester resin further comprises at least one nanocellulose selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

**11.** A process for preparing a biodegradable polyester resin, which comprises:

a first step of mixing a diol component and an aromatic dicarboxylic acid to obtain a slurry;
a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and
a third step of subjecting the prepolymer to a polycondensation reaction,
wherein the biodegradable polyester resin comprises a first repeat unit comprising a first diol residue and an aromatic dicarboxylic acid residue, and a second repeat unit comprising a second diol residue and an aliphatic dicarboxylic acid residue, and
a bio-derived softener is added during the esterification reaction, during the polycondensation reaction, or both.

**12.** The process for preparing a biodegradable polyester resin of claim 11, wherein the bio-derived softener is added in an amount of 10 ppm or more based on the total weight of the diol, aromatic dicarboxylic acid, and aliphatic dicarboxylic acid during the esterification reaction.

**13.** A biodegradable polyester film, which comprises a biodegradable polyester resin, wherein the biodegradable polyester resin comprises a first repeat unit comprising a first diol residue and an aromatic dicarboxylic acid residue, and a second repeat unit comprising a second diol residue and an aliphatic dicarboxylic acid residue; and a bio-derived softener.

[Fig. 1]

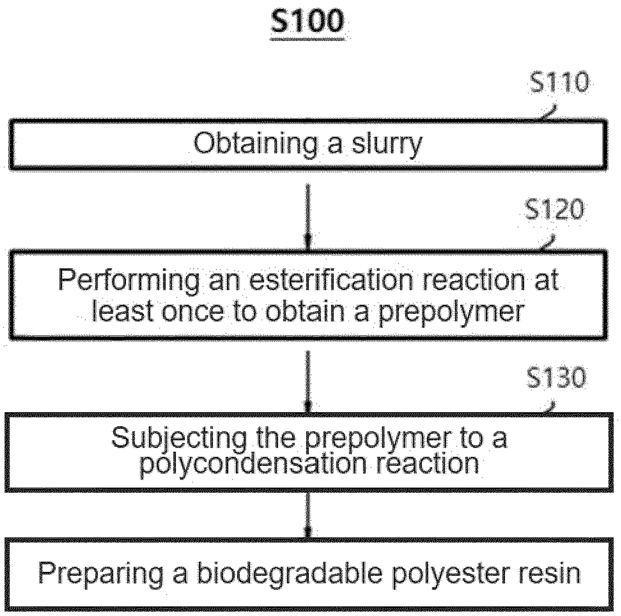
S100
S110
Obtaining a slurry
S120
Performing an esterification reaction at least once to obtain a prepolymer
S130
Subjecting the prepolymer to a polycondensation reaction
Preparing a biodegradable polyester resin

[Fig. 2a]

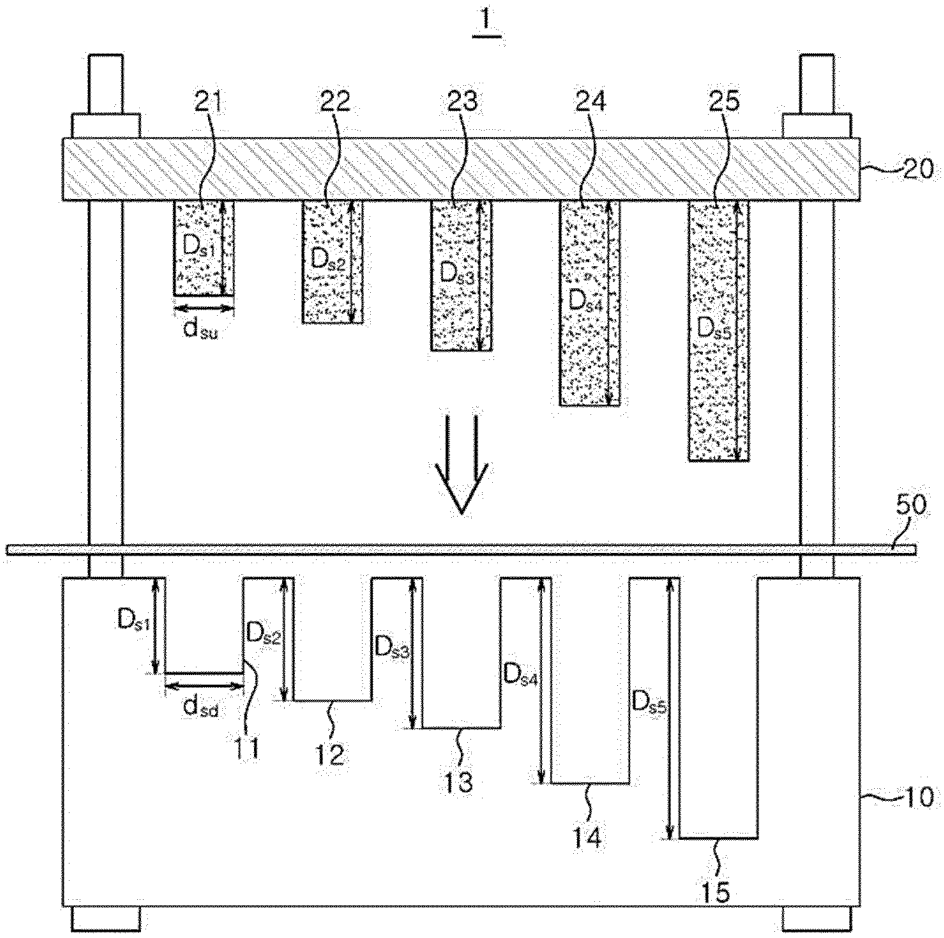
1
21
22
23
24
25
20
Ds1
Ds2
Ds3
Ds4
Ds5
dsu
50
dsd
11
12
13
14
15
10

[Fig. 2b]

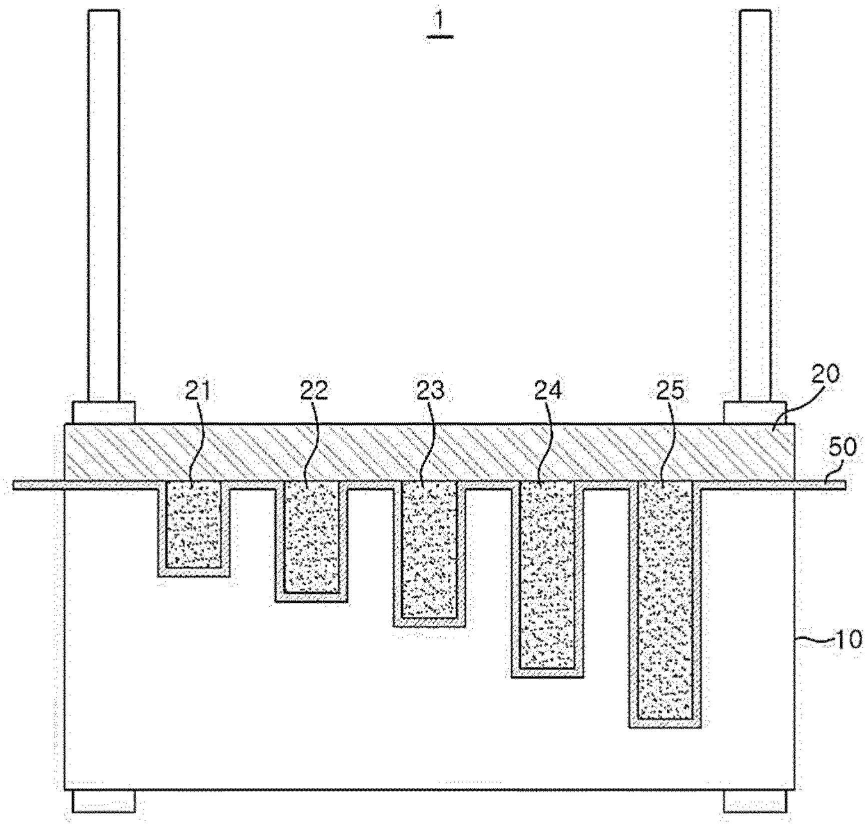

[Fig. 3]

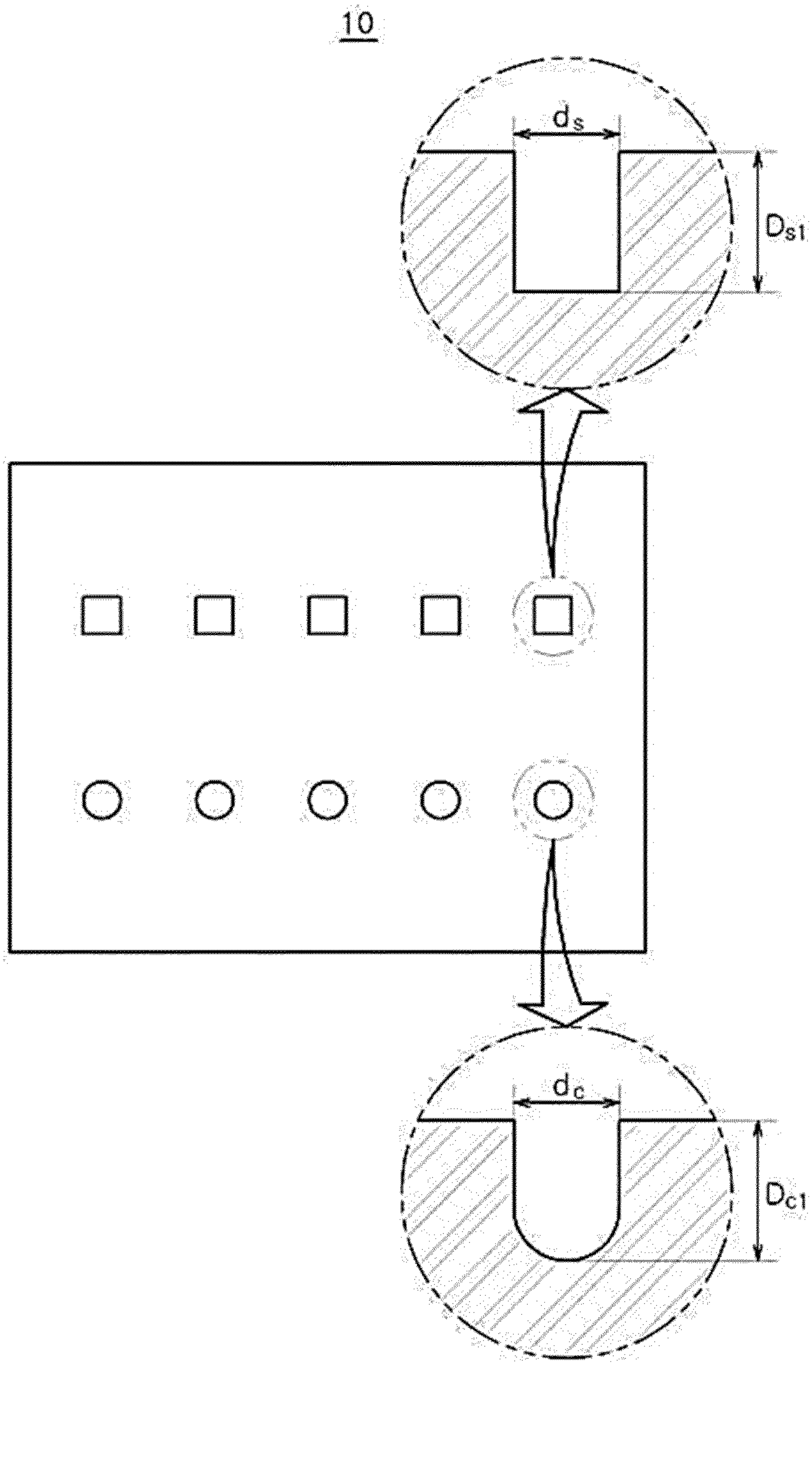

**INTERNATIONAL SEARCH REPORT**

International application No. **PCT/KR2022/016115**

**A. CLASSIFICATION OF SUBJECT MATTER**

**C08G 63/16**(2006.01)i; **C08G 63/181**(2006.01)i; **C08L 67/02**(2006.01)i; **C08L 23/00**(2006.01)i; **C08L 1/02**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08G 63/16(2006.01); C08G 63/12(2006.01); C08G 63/672(2006.01); C08J 5/18(2006.01); C08L 23/02(2006.01); C08L 67/02(2006.01); C08L 67/03(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 스쿠알란(squalane), 생분해성 수지(biodegradable resin)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-516670 A (LAPOL LLC.) 26 May 2011 (2011-05-26)<br>See paragraphs [0001], [0006], [0012] and [0064]. | 1,9,13<br>2-8,10-12 |
| Y | POLGAR, L. M. et al. Sustainable EPM rubber compounds. Polymer-plastic technology and materials. 2020, vol. 59, no. 12, pp. 1379-1385.<br>See abstract; and page 1380. | 2-8,12 |
| Y | KR 10-2021-0057244 A (SAMYANG CORPORATION) 21 May 2021 (2021-05-21)<br>See claims 2, 4 and 5; and paragraphs [0009], [0012] and [0017]. | 10 |
| Y | KR 10-2006-0075724 A (NPI CO., LTD.) 04 July 2006 (2006-07-04)<br>See claim 1; and page 6, comparative example 2. | 11,12 |
| A | KR 10-2012-0013707 A (SKC CO., LTD.) 15 February 2012 (2012-02-15)<br>See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 January 2023** | **30 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/016115**

| Patent document cited in search report | Publication date (day/month/year) | Patent family member(s) | Publication date (day/month/year) |
|---|---|---|---|
| JP 2011-516670 A | 26 May 2011 | BR PI0911331 A2 | 06 October 2015 |
| | | CN 102046694 A | 04 May 2011 |
| | | CN 102046694 B | 11 September 2013 |
| | | EP 2265662 A1 | 29 December 2010 |
| | | TW 201000516 A | 01 January 2010 |
| | | US 2009-0253871 A1 | 08 October 2009 |
| | | US 7842761 B2 | 30 November 2010 |
| | | WO 2009-146109 A1 | 03 December 2009 |
| KR 10-2021-0057244 A | 21 May 2021 | KR 10-2438607 B1 | 01 September 2022 |
| KR 10-2006-0075724 A | 04 July 2006 | None | |
| KR 10-2012-0013707 A | 15 February 2012 | KR 10-1327890 B1 | 11 November 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20140106882